# FASCICULE DE BREVET EUROPEEN

(11) **EP 2 126 887 B1**
(45) Date de publication et mention de la délivrance du brevet: **16.04.2014**
(21) Numéro de dépôt: 08709138.5
(22) Date de dépôt: 20.02.2008
(51) Int. Cl.: G09G 3/36, G02F 1/139

(54) **DISPOSITIF AFFICHEUR A CRISTAL LIQUIDE COMPRENANT DES MOYENS PERFECTIONNES DE COMMUTATION**
FLÜSSIGKRISTALLANZEIGE MIT VERBESSERTEN SCHALTMITTELN
LIQUID CRYSTAL DISPLAY COMPRISING IMPROVED SWITCHING MEANS

(30) Priorité: 21.02.2007 FR 0753398; 02.03.2007 FR 0753626
(43) Date de publication de la demande: 02.12.2009
(73) Titulaire: France Brevets, 75009 Paris (FR)
(72) Inventeur: MARTINOT-LAGARDE, Philippe, F-91460 Marcoussis (FR); JOLY, Stéphane, F-72650 Saint Saturnin (FR); LAFFITTE, Jean Denis, F-91310 Leuville Sur Orge (FR)
(74) Mandataire: Joubert, Cécile
(86) Numéro de dépôt international: PCT/EP2008/052082
(87) Numéro de publication internationale: WO 2008/101969

(56) Documents cités:
- WO-A-03/090197
- WO-A-2004/104980
- FR-A1- 2 874 446
- FR-A1- 2 874 447
- DOZOV I ET AL: "Nemoptic's bistable nematic liquid-crystal technology" INFORMATION DISPLAY, PALISADES INSTITUTE FOR RESEARCH SERVICES, NEW YORK, NY, US, janvier 2002 (2002-01), pages 10-12, XP002216407 ISSN: 0362-0972

## Description

### DOMAINE TECHNIQUE

La présente invention concerne le domaine des afficheurs à cristaux liquides.

Plus précisément, la présente invention concerne les afficheurs bistables à cristaux liquides nématiques. Elle s'applique en particulier aux afficheurs bistables à cristaux liquides nématiques dont deux textures stables diffèrent par une torsion d'environ 180°.

### BUT DE L'INVENTION

Le but de la présente invention est d'améliorer les performances des dispositifs d'affichage bistable. En particulier l'invention a pour but d'améliorer, par l'utilisation de nouveaux moyens, la commutation d'états au niveau des bords des pixels.

### ETAT DE LA TECHNIQUE

### Afficheurs LCD classiques

Les afficheurs à cristaux liquides les plus répandus utilisent un cristal liquide de type nématique. Ils sont constitués d'une couche de cristal liquide placée entre deux lames. Chaque lame comporte un substrat, souvent en verre, sur lequel ont été déposées une électrode conductrice puis une couche dite d'ancrage également appelée couche d'alignement. La couche d'ancrage exerce, sur les molécules de cristal liquide voisines, un couple de rappel qui tend à les orienter parallèlement à une direction nommée axe facile. Les couches d'ancrage sont souvent réalisées par un dépôt de polymère brossé pour créer la direction de l'axe facile. Celle-ci est le plus souvent très proche de la direction de brossage.

L'épaisseur de la cellule ainsi constituée est rendue constante en répartissant, entre les lames, des billes dont le diamètre est égal à l'épaisseur souhaitée (typiquement de 1 à 6 µm).

La plupart des dispositifs à base de cristaux liquides proposés et réalisés à ce jour sont monostables. En l'absence de champ électrique, le cristal liquide est orienté selon une seule texture. Elle correspond à un minimum absolu de l'énergie élastique du cristal liquide dans la cellule, compte tenu des ancrages sur les deux lames. Sous champ électrique, cette texture est déformée continûment et ses propriétés optiques varient en fonction de la tension appliquée. Près des lames, les couches d'ancrage dite « couches d'ancrage fort » maintiennent la direction des molécules. Leur direction varie peu. A la coupure du champ, le nématique est rappelé par les ancrages sur les deux lames. Il revient selon la texture stable. Le dispositif est monostable. L'homme de l'art reconnaîtra le mode de fonctionnement des afficheurs nématiques les plus répandus : nématiques tordus (TN), supertordus (STN), à biréfringence électriquement contrôlée (ECB), nématiques verticalement alignés (VAN), etc. Au niveau de l'adressage, ces afficheurs peuvent être adressés directement (très faible résolution), en mode multiplexé (résolution moyenne) ou en mode actif (haute résolution).

### État de la technologie BiNem

Une nouvelle génération d'afficheurs nématiques, dits « bistables », est apparue depuis quelques années : ils fonctionnent par commutation entre deux états, stables en l'absence de champ électrique. Le champ électrique externe n'est appliqué que pendant le temps nécessaire pour faire commuter d'un état à l'autre la texture du cristal liquide. En l'absence de signal électrique de commande, l'afficheur reste en l'état obtenu. Par son principe de fonctionnement, ce type d'afficheur consomme une énergie proportionnelle au nombre de changements d'images. Ainsi, quand la fréquence de ces changements diminue, la puissance nécessaire pour le fonctionnement de l'afficheur tend vers zéro.

### Principe de fonctionnement

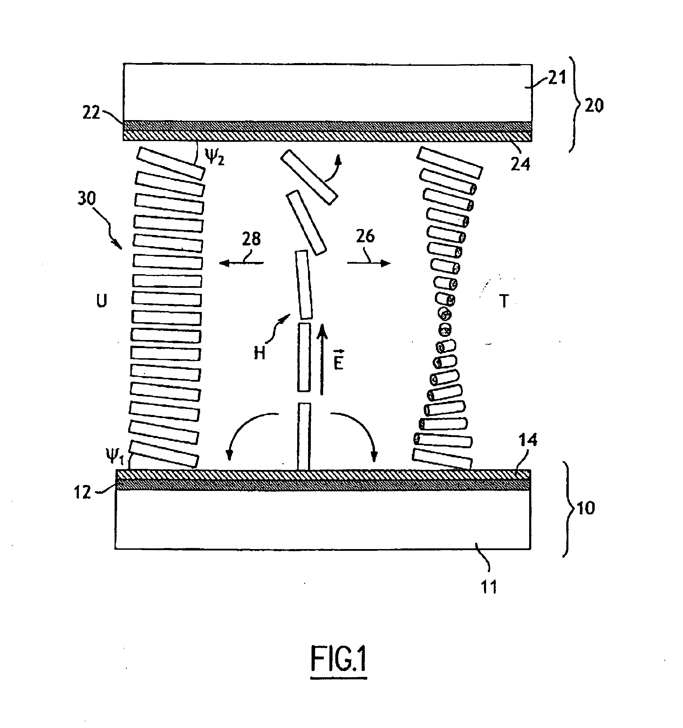

L'afficheur bistable dénommé BINEM [1], [2] est présenté schématiquement sur la figure 1. Il utilise deux textures, l'une uniforme ou faiblement tordue U (illustrée sur la gauche de la figure 1) dans laquelle les molécules sont sensiblement parallèles entre elles, et l'autre T (illustrée sur la droite de la figure 1) qui diffère de la première par une torsion d'environ +/- 180°, ceci à +/- 15° près. La couche de cristal liquide 30 est placée entre deux lames 20 et 10, que l'on appelle lame maître et lame esclave. La lame maître 20 comporte un substrat 21, une électrode 22 et une couche d'ancrage 24 réalisant un ancrage azimuthal et zénithal fort du cristal liquide, avec un « prétilt » ou pré-inclinaison par rapport à la surface de la lame 20, dont la valeur *ψ₂* est classique, proche de 5°. La lame esclave 10 comporte un substrat 11, une électrode 12 et une couche d'ancrage 14 réalisant un ancrage zénithal faible, un ancrage azimuthal moyen ou fort du cristal liquide et un « prétilt » très faible (*ψ₁* << 1° [3],[8]). Les deux prétilts *ψ₁* et *ψ₂* sont dans le même sens, c'est à dire que, dans la texture U, les molécules de cristal liquide restent inclinées selon le même signe d'inclinaison sur toute l'épaisseur de la cellule. Les électrodes habituellement transparentes 12 et 22 déposées sur les substrats 11 et 21 permettent d'appliquer un champ électrique perpendiculaire aux lames 10 et 20.

L'adjonction de polariseurs sur chacun des substrats 11 et 21 à l'extérieur de la cellule permet d'associer à chaque texture un état optique, par exemple sombre pour U et clair pour T ou inversement, en fonction des angles des deux polariseurs par rapport aux directions d'ancrage.

Le nématique est chiralisé avec un pas spontané *pₒ*, choisi proche de quatre fois l'épaisseur d de la cellule, pour égaliser les énergies des deux textures précitées. Le rapport entre l'épaisseur d de la cellule et le pas spontané *pₒ*, soit *d*/*pₒ,* est donc environ égal à 0,25 +/- 0,1. Sans champ, les états T et U sont les états d'énergie minimale : la cellule est bistable.

Sous fort champ électrique une texture presque homéotrope, dénommée H et illustrée au milieu de la figure 1, est obtenue. Au voisinage de la surface de la lame esclave 10, les molécules lui sont perpendiculaires, l'ancrage zénithal est dit « cassé ». On appelle tension de cassure *V_{cass}* la tension électrique correspondant à la cassure de l'ancrage zénithal sur la lame esclave 10. Nous adopterons dans tout le document la dénomination cassure d'ancrage pour qualifier la cassure d'ancrage zénithale.

Cette tension Vcass correspond à un champ électrique de cassure tel que Vcass = Ecass.d. Typiquement Ecass est compris entre 5 et 15V/µm à température ambiante, pour une couche d'ancrage zénithal faible telle que la lame esclave 10.

A la coupure du champ électrique, la cellule évolue vers l'une ou l'autre des textures bistables U et T (voir figure 1). Lorsque les signaux de commande utilisés induisent un fort écoulement du cristal liquide au voisinage de la lame maître 20, le couplage hydrodynamique 26 entre la lame maître 20 et la lame esclave 10 induit la texture T. Dans le cas contraire, la texture U est obtenue par couplage élastique 28 entre les deux lames 10 et 20, aidé par l'inclinaison éventuelle de l'ancrage faible [1], [2].

Dans la suite on désignera par « commutation » d'un élément d'écran BiNem le fait de faire passer les molécules du cristal liquide par l'état homéotrope H (cassure d'ancrage), puis de les laisser évoluer ensuite, à la coupure du champ électrique vers une des deux textures bistables U ou T ou vers une coexistence de ces textures. La coupure du champ électrique correspond à un front descendant de la tension appliquée (diminution de la tension électrique en valeur absolue), qui sera appelé front descendant actif lorsque ce front descendant est celui qui permet, en fonction de ses caractéristiques, de choisir l'état final en terme de texture (la tension pixel peut être multiplateau [6], et seul un des fronts descendants est le front actif).

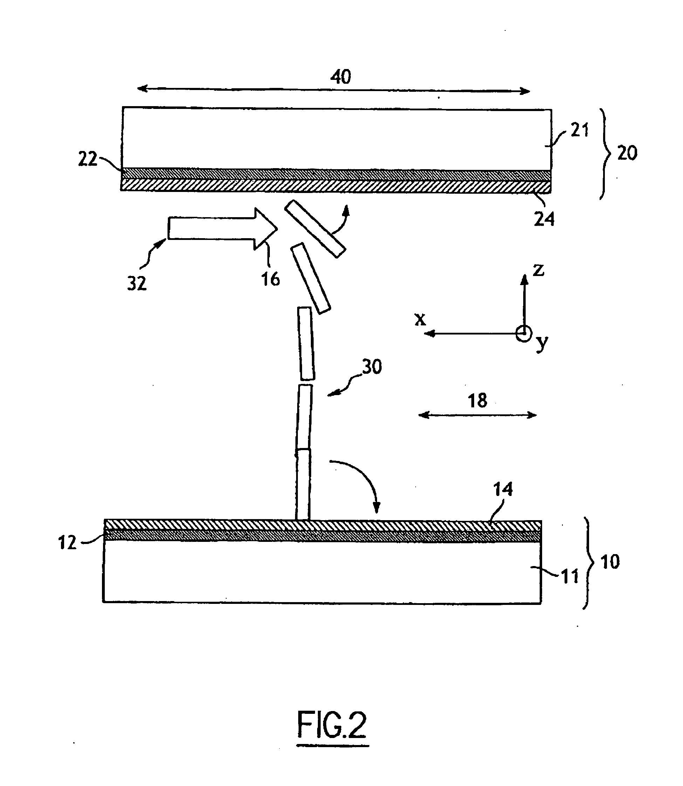

Le couplage hydrodynamique [4] entre lame esclave 10 et lame maître 20 est lié à la viscosité du cristal liquide. A l'arrêt du champ électrique appliqué à la zone considérée, le retour à l'équilibre des molécules ancrées sur la lame maître 20 crée un écoulement de chute 32 près de la lame maître 20, dont le sens 16 est indiqué sur la figure 2. La viscosité fait diffuser l'écoulement de chute 32 dans toute l'épaisseur de la cellule en moins d'une microseconde. Si l'écoulement de chute 32 est assez fort près de la lame esclave 10, il y incline les molécules dans la direction qui induit la texture T. Les molécules tournent en sens inverse sur les deux lames 10 et 20. Le retour à l'équilibre des molécules près de la lame esclave 10 est un deuxième moteur de l'écoulement, il le renforce et aide au passage homogène du pixel en texture T . Ainsi le passage de la texture sous champ H à la texture T est obtenu grâce à l'écoulement de chute 32, donc au déplacement du cristal liquide dans le sens 16 où est incliné l'ancrage des molécules sur la lame maître 20 (voir figure 2), le long d'une direction 18. Cette direction 18 de l'écoulement de chute proche de la lame maître est sensiblement parallèle à la direction de brossage de sa couche d'alignement, laquelle est référencée 40 sur la figure 2. Elle peut ne pas lui être strictement parallèle du fait par exemple de la torsion de la texture de départ. Typiquement elle lui est parallèle à environ +/- 10°.

Le couplage élastique entre les deux lames 10, 20 donne une très légère inclinaison des molécules près de la lame esclave 10, dans la texture H sous champ, même si le champ appliqué tend à les orienter perpendiculairement aux lames. En effet l'ancrage fort incliné sur la lame maître 20 maintient inclinées les molécules adjacentes. L'inclinaison près de la lame maître 20 est transmise par l'élasticité d'orientation du cristal liquide jusqu'à la lame esclave 10. Sur la lame esclave 10, l'ancrage et une éventuelle inclinaison de l'axe facile de celui-ci amplifient l'inclinaison des molécules [5]. Quand, à l'arrêt du champ, le couplage hydrodynamique est insuffisant pour lutter contre l'inclinaison résiduelle des molécules près de la lame esclave 10, les molécules près des deux lames 10 et 20 reviennent à l'équilibre en tournant dans le même sens : la texture U est obtenue. Ces deux rotations sont simultanées : elles induisent des écoulements en sens inverse qui se contrarient. Le débit total est pratiquement nul. Il y a donc très peu de déplacement global du cristal liquide pendant le passage de la texture H à la texture U.

La commutation en U ou en T du pixel est fonction de l'intensité de l'écoulement de chute 32 créé par la lame maître 20 : cet écoulement diffuse vers la lame esclave 10, et l'intensité de l'écoulement obtenue au voisinage de la lame esclave 10 détermine la texture finale obtenue (U ou T). Pour obtenir un écoulement de chute 32 important induisant la texture T, il faut appliquer une impulsion de champ électrique à flanc de descente raide, par exemple un signal de type créneau. Pour obtenir la texture U, une impulsion de champ électrique à flanc de descente lente générant un très faible écoulement de chute est nécessaire, par exemple une descente en pente douce ou par sauts successifs entre des plateaux [1],[2],[6].

Il est également possible d'obtenir des niveaux de gris dans un pixel en maîtrisant l'intensité de l'écoulement de chute via la variation de tension aux bornes du pixel. Pour une valeur donnée de cette variation de tension, on obtient au sein d'un même pixel une fraction de sa surface en texture T et l'autre fraction en texture U. A une autre valeur de variation de tension et donc de cet écoulement de chute correspond un rapport différent entre les surfaces occupées par les deux textures U et T. Des niveaux de gris sont ainsi obtenus [9].

Le fait que la commutation soit directement reliée à l'intensité de l'écoulement près d'une des lames 10 et 20 est une caractéristique spécifique des afficheurs BiNem, les afficheurs classiques TN et STN ne commutent pas selon ce principe.

### Adressage

Les 3 modes d'adressage développés pour les cristaux liquides standards (direct, multiplexé, actif) peuvent être utilisés pour l'afficheur BiNem. Le mode d'adressage le plus commun de l'afficheur BiNem est l'adressage passif multiplexé, mais un adressage actif à l'aide de transistors en couches minces est également possible [7]. Dans les modes multiplexés actif et passif, l'afficheur BiNem est un écran matriciel formé de n fois m éléments d'écran appelés pixels, n étant le nombre de lignes et m le nombre de colonnes, et l'adressage s'effectue ligne par ligne.

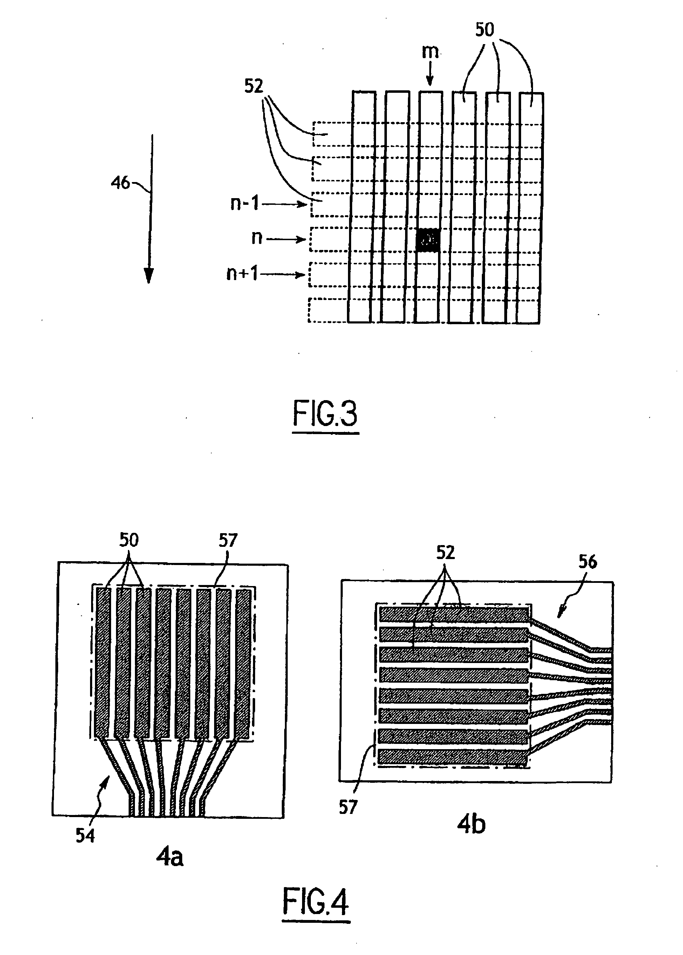

Dans le mode passif multiplexé, chaque pixel est constitué par l'intersection d'une bande conductrice ligne 52 et d'une bande conductrice colonne 50 ; ces bandes perpendiculaires sont déposées respectivement sur les lames maître 20 et esclave 10 (voir figure 3). La zone située entre deux bandes conductrices adjacentes portées par un même substrat 11 ou 21 est appelée espace interpixel. La zone constituée de l'ensemble des pixels est appelée zone matricielle. Habituellement dans l'état de la technique, la zone matricielle correspond à la zone d'affichage, zone sur laquelle on affiche le contenu de l'image que l'on souhaite visualiser. En dehors de la zone matricielle, les bandes conductrices précitées 50, 52 se transforment en pistes 54, 56 qui réalisent la connexion aux circuits de commande appelés drivers situés par exemple sur des éléments de connexion flexibles soudés à l'écran. Pour afficher le pixel de coordonnées (n, m) on applique un signal ligne sur la ligne n et un signal colonne sur la colonne m.

Un schéma de principe des électrodes formées sur les deux substrats de verre 11 et 21 d'un afficheur classique conforme à l'état de la technique est illustré figure 4. Généralement, les électrodes conductrices sont réalisées avec un matériau conducteur transparent appelé ITO (Oxyde mixte d'Indium et d'Étain). Mais lorsque l'afficheur est réflectif, les électrodes situées sur le côté opposé à l'observateur peuvent être réalisées avec un matériau conducteur opaque, par exemple en aluminium. Pour exécuter les électrodes, une couche conductrice mince est déposée sur les deux substrats 11 et 21 puis gravée selon la conformation recherchée. La figure 4a illustre le masque permettant de graver les électrodes 50 sur le substrat dit supérieur 21, dans notre exemple les colonnes. La figure 4b illustre le masque permettant de graver les électrodes 52 sur le substrat dit inférieur 11, dans notre exemple les lignes. Sur les figures 4a et 4b, on a ainsi référencé 50 les bandes formant les électrodes colonnes et 52 les bandes formant les électrodes lignes (ces bandes assurent l'adressage de la zone utile), puis 54 et 56 les pistes assurant la connexion des bandes précitées 50 et 52 aux drivers. Les limites de la zone matricielle correspondent au cadre en traits mixtes référencé 57 sur les figures 4a et 4b. Les deux zones 57 illustrées sur les figures 4a et 4b sont superposées lors de l'assemblage et du scellement de la cellule.

Dans le mode d'adressage actif, généralement l'un des substrats porte une matrice d'électrodes de pixels individualisées et isolées, agencées en un réseau organisé en lignes et colonnes, tandis que sur l'autre substrat l'électrode peut être continue. Cette dernière est habituellement portée à un potentiel constant que nous nommerons potentiel de référence. Le signal électrique de commande est amené respectivement sur chaque électrode de pixel du premier substrat par des pistes conductrices très fines. Celles-ci sont disposées selon les lignes et les colonnes sur le même substrat. Elles se croisent sans être en contact. Près de l'intersection de chaque piste ligne et chaque piste colonne, un élément actif est positionné, tel un transistor. Dans ce cas, habituellement, la piste ligne est reliée à la borne de commande du transistor, l'électrode du pixel et la piste colonne étant reliées aux deux autres bornes principales du transistor.

### Pilotage d'un afficheur BiNem en mode multiplexé

Lorsque la structure de l'afficheur est matricielle comme décrit précédemment, l'adressage s'effectue ligne par ligne. Lorsque l'on souhaite inscrire une ligne donnée n, un signal électrique est appliqué sur cette ligne qui alors est dite «activée». Nous appellerons ce signal d'activation VL. Pour le BiNem, on distingue deux phases pendant l'activation : la première phase consiste essentiellement à obtenir une cassure d'ancrage, c'est à dire la texture homéotrope sur la ligne considérée, en appliquant par exemple une tension V1 sur le signal ligne (V1>Vcass), ce qui constitue un premier plateau de VL. Pendant la deuxième phase, un signal V2 est appliqué sur la ligne par exemple V2 ≤ V1, ce qui constitue un deuxième plateau de VL, et des signaux électriques dits «data» appelés Vc sont appliqués simultanément sur toutes les colonnes. Le front de descente du signal data Vc est synchronisé avec le front de descente du deuxième plateau du signal d'activation ligne [1]. Selon la valeur et/ou la forme et/ou la durée du signal Vc appliqué à chacune des colonnes, la texture U ou T est obtenue dans le pixel correspondant à l'intersection de cette colonne et de la ligne activée [6]. Puis la ligne suivante est à son tour activée, les autres lignes étant non activées et ainsi de suite de la première à la dernière ligne de l'afficheur. Le temps entre la fin d'activation d'une ligne et le début de l'activation de la ligne suivante est appelé temps interligne t_{L}. Ce temps est typiquement compris entre 50 µs et 10 ms. La valeur de ce temps est très importante pour obtenir une bonne commutation, et varie sensiblement avec la température. Dans tous les cas, le temps t_{L} >0. Nous appellerons cet adressage «adressage en une étape». L'ordre d'activation des lignes (d'abord n-1, puis n, puis n+1) définit le sens de balayage 46 (figure 3).

Le document [9] décrivant la réalisation de niveaux de gris prévoit trois variantes d'obtention de niveaux de gris (figure 23 du document [9]). Une première variante consiste à faire varier l'amplitude du signal colonne Vc appliqué au pixel P. Une deuxième variante consiste à faire varier la durée du signal colonne Vc appliqué au pixel P. Dans ces deux variantes le front de descente du signal colonne est synchronisé avec le front de descente du deuxième plateau du signal ligne. Une troisième variante appelée «modulation de phase», consiste en la variation de la synchronisation du signal colonne Vc avec le front de descente du deuxième plateau du signal d'activation ligne.

Une des différences importantes à noter entre le mode passif et le mode actif est que dans le mode passif multiplexé, quand une ligne p n'est pas activée, chacun des pixels de cette ligne p est soumis aux signaux colonnes correspondant aux data des autres pixels de sa colonne, appliqués lors de l'activation de la ligne à laquelle ils appartiennent. Autrement dit, lorsque la ligne n du pixel P(n,m) est activée par un signal VL(n) et qu'un signal Vc(m) est envoyé sur la colonne m de ce pixel afin de générer le signal pixel Vp = VL(n)-Vc(m), tous les pixels de la colonne m sont soumis simultanément à Vc(m). Dans l'adressage actif, lors de l'activation d'une ligne, les signaux colonnes ne sont appliqués qu'aux pixels de cette ligne ; les transistors des lignes non activées ne sont pas conducteurs, leurs pixels ne reçoivent pas de signal.

Selon un mode préférentiel connu, préalablement à l'adressage ligne à ligne, on effectue de manière collective l'adressage complet de l'écran ou d'une partie de l'écran dans une texture donnée, habituellement T, en activant simultanément toutes les lignes ou un groupe de lignes. Les lignes sont ensuite adressées une par une, selon la méthode de multiplexage classique, pour afficher l'image voulue. Cet «adressage en deux étapes» permet de mieux maîtriser la commutation des pixels en particulier pour le contrôle des niveaux de gris, car ainsi les pixels partent d'un état bien défini au début de la deuxième étape.

Selon un mode préférentiel connu mais non limitatif de réalisation d'un afficheur BiNem, la direction de brossage des couches d'alignement est orthogonale à la direction des lignes de l'afficheur, ce type d'afficheur est dit « à brossage orthogonal ».

### Limitations présentées par les afficheurs BiNem réalisés selon l'état de la technique:

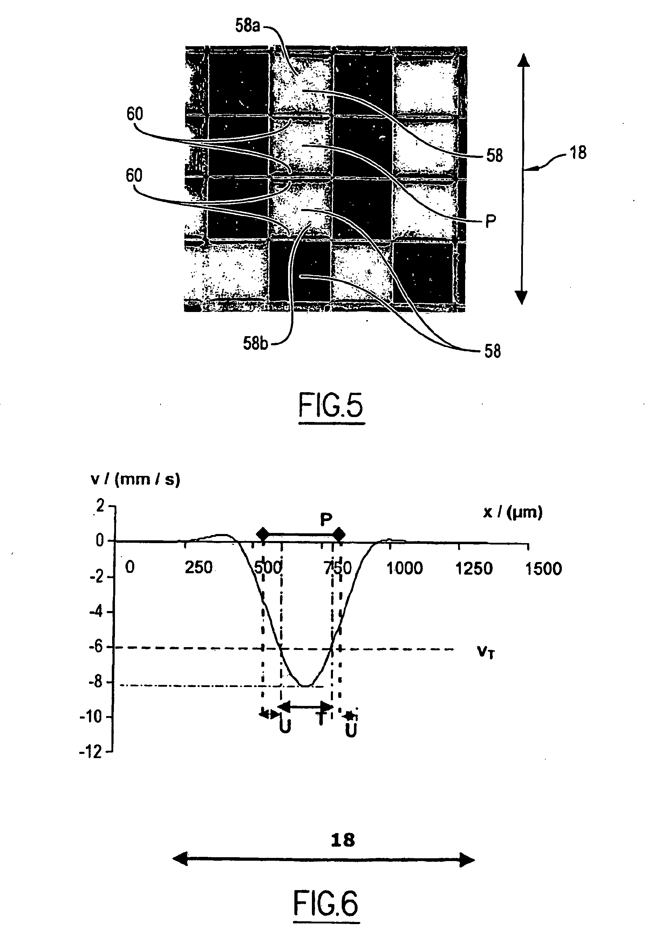

Les inventeurs ont constaté que l'utilisation de l'écoulement pour effectuer la commutation d'un pixel P a pour conséquence que la commutation du pixel P est également sensible aux écoulements créés dans les pixels voisins lors de l'adressage, écoulements qui diffusent dans le pixel à commuter. L'interaction de ces écoulements dus aux pixels voisins avec l'écoulement intrinsèque du pixel P perturbe la commutation du pixel P. On définit les pixels voisins de P comme les pixels susceptibles de perturber sa commutation par leurs écoulements, donc les pixels 58 situés de part et d'autre du pixel P dans la direction de l'écoulement 18 (figure 5).

Lorsque la direction de brossage 40 est orthogonale aux lignes, la direction de l'écoulement 18 est globalement parallèle à la direction de brossage. Les pixels voisins au sens de l'écoulement sont les pixels situés de part et d'autre de P sur sa colonne m. Lorsque la direction de brossage est quelconque, les pixels voisins sont ceux situées de part et d'autre de P selon la direction de l'écoulement, globalement parallèle (à +/- 10°) à la direction de brossage.

Lorsque sont considérés tous des pixels d'une ligne n, l'ensemble de leurs voisins sont situés, et ce quelque soit la direction de brossage, sur les lignes adjacentes à la ligne n, soit en amont les lignes n-1, n-2 ... et en aval les lignes n+1,n+2.... On parlera alors de lignes voisines de la ligne n (au sens de l'écoulement).

### Exemple de perturbation par les voisins : «effet de bord ».

Lors de l'adressage des afficheurs BiNem, sur deux des bords des pixels que l'on cherche à commuter en texture T, peut apparaître un domaine qui commute en U. Ce défaut est net sur la figure 5, sur des pixels commutés en T ; on voit sur ces pixels, par exemple le pixel P, que leurs bords 60 perpendiculaires au brossage, donc à la direction des écoulements 18, ont commuté en U au lieu de commuter en T. Sur la figure 5, les pixels commutés en T sont illustrés en clair, tandis que les pixels commutés en U sont illustrés en foncé.

Les inventeurs ont déterminé après de longues analyses que ces défauts s'expliquent par le fait que l'écoulement créé par le retour à l'équilibre des molécules près de la lame maître 20 est freiné au bord amont et au bord aval du pixel P. Le départ du liquide en amont de l'écoulement dans le pixel P crée une dépression dans le pixel voisin précédent 58a. Son arrivée en aval crée une surpression dans le pixel voisin suivant 58b. Ces deux effets freinent globalement l'écoulement dans tout le pixel P. Mais ils sont surtout importants aux deux bords précités 60 du pixel P, là où s'arrête le moteur de l'écoulement. Juste aux bords 60 du pixel P, la vitesse peut être par deux fois plus faible qu'au centre de celui-ci. Dans ces conditions le bord 60 du pixel P peut ne jamais commuter en T, quelle que soit la chute de tension du signal sur ce pixel.

La figure 6 explicite ce phénomène. Elle présente en fonction de x (qui correspond à un axe d'abscisse parallèle à la direction 18), la moyenne en z (axe perpendiculaire aux lames 11 et 21 - voir figure 2) de la vitesse selon x (vitesse moyenne) de l'écoulement de chute à l'arrêt d'un signal créneau appliqué au pixel P d'amplitude Vp = 20 Volts. Aucun autre signal n'est appliqué à l'afficheur. La valeur négative de la vitesse signifie un écoulement de chute en sens inverse de x, donc selon le sens 16 (figure 2). Sur la figure 6, v_{T} représente la vitesse minimum de l'écoulement de chute nécessaire à la commutation vers T. On voit sur la figure 6 qu'aux bords de P situés selon la direction 18, la valeur absolue de la vitesse v de l'écoulement de chute est inférieure à v_{τ}. Ces bords commutent donc en U.

### DESCRIPTION DE L'INVENTION

La présente invention a pour objectif de remédier aux inconvénients précités constatés lors de la mise en oeuvre des afficheurs connus de l'état de la technique.

Cet objectif est atteint dans le cadre de la présente invention grâce à un procédé de commande d'un afficheur à cristal liquide nématique bistable à cassure d'ancrage, ledit afficheur comprenant deux textures cristal liquide stable, l'une uniforme ou faiblement tordue dénommée U dans laquelle les molécules sont sensiblement paralléles entre elles et l'autre dénommée T qui diffère de la première par une torsion d'environ +/- 180° à +/- 15° près et comprenant une matrice de pixels agencés en lignes et colonnes croisées, dans lequel une commutation d'état des molécules de cristal liquide d'un pixel vers une texture choisie. U ou T ou une coexistence des deux textures, est pilotée par application d'un signal électrique de commande entre deux électrodes (50, 52) encadrant chaque pixel comprenant une tension supérieure à la tension de cassure d'ancrage puis un front descendant actif permettant l'obtention de ladite texture choisie, ladite commutation vers une texture choisie s'effectuant en deux étapes par groupe de p lignes, une première étape où est effectuée de manière collective la commutation de tous les pixels d'un groupe de p lignes, correspondant aux ligne n à n+p-1, p étant supérieur ou égal à 1, vers la texture T et une deuxième étape où lesdites p lignes dudit groupe sont activées une par une pour commuter tous les pixels desdites p lignes vers la texture choisie, ladite commutation faisant intervenir un écoulement selon une direction déterminée (18) proche de la direction de brossage, caractérisé par le fait qu'il comprend, pour contrôler la commutation de certains au moins des pixels (P) dudit groupe de p lignes, une étape consistant à appliquer sur au moins un pixel (58) voisin selon la direction d'écoulement d'un pixel (P) dont la commutation doit être contrôlée par le signal électrique de commande, l'au moins un pixel voisin étant situé à l'extérieur du groupe des lignes à commuter, des signaux électriques auxiliaires adaptés pour induire dans ledit pixel voisin un écoulement auxiliaire parallèle à ladite direction, lesdits signaux auxiliaires étant appliqués lors de la première étape de la commutation vers une texture choisie, dont l'amplitude est inférieure à la tension de cassure d'ancrage, dont les fronts descendants sont temporellement placés en avance ou en coïncidence par rapport au front descendant actif du signal électrique de commande, le décalage temporel des fronts descendants des signaux électriques auxiliaires par rapport au front descendant actif du signal électrique de commande étant compris entre 0 et quelques dizaines de us à température ambiante

La présente invention concerne également les afficheurs à cristaux liquides mettant en oeuvre le procédé précité.

Pour contrôler la commutation d'un pixel P, l'invention consiste ainsi essentiellement à appliquer, sur un ou plusieurs pixels situés d'un côté, de l'autre ou de part et d'autre du pixel P dans la direction de l'écoulement 18 (pixels voisins 58), des signaux électriques auxiliaires à un instant bien défini par rapport au signal de commutation de P. Le mouvement des molécules créé par ces signaux électriques auxiliaires dans les pixels voisins induit dans le pixel P un écoulement auxiliaire qui permet de maîtriser la commutation du pixel P.

Le signal auxiliaire peut être envoyé sur les pixels voisins au moyen des électrodes de lignes ou des électrodes de colonnes ou des deux types d'électrodes.

Le signal électrique auxiliaire appliqué à un pixel voisin a préférentiellement mais non limitativement la forme d'un créneau, monopolaire ou bipolaire. Comme nous le verrons plus loin, à sa montée (front montant caractérisé par une augmentation en valeur absolue de la tension), il induit un écoulement fort qui favorise le passage en U du pixel qui commute, à condition que ce front montant soit placé au bon instant par rapport au signal pixel. A sa descente (front descendant caractérisé par une diminution en valeur absolue de la tension), il induit un écoulement plus faible mais suffisant pour aider le passage en T du pixel qui commute, à condition là encore que ce front descendant soit placé au bon instant par rapport au signal pixel.

Dans le cas de l'affichage matriciel passif, au moment de l'adressage d'une ligne, le signal colonne est appliqué sur tous les pixels de chaque colonne. Dans le cas du brossage orthogonal, les pixels de la colonne m sont les pixels voisins 58 tels que définis précédemment pour le pixel P(n,m). Le signal auxiliaire peut alors être fourni par un signal sur la colonne m correctement placé temporellement. Il peut cependant être utile de contrôler l'amplitude du signal auxiliaire en appliquant également un signal sur les lignes voisines de la ligne activée.

On peut également appliquer un signal auxiliaire aux pixels voisins 58 en appliquant un signal sur les lignes correspondant à ces pixels voisins (lignes n-1, n-2 , n+1, n+2 ...).

Dans le cas d'affichage matriciel actif avec brossage orthogonal, l'invention est plus facile à mettre en oeuvre que pour l'adressage passif : le signal auxiliaire peut être appliqué uniquement sur les lignes voisines nécessaires indépendamment du signal de commutation car les lignes sont ouvertes individuellement.

### AVANTAGES DE L'INVENTION

Un avantage de l'utilisation de signaux électriques auxiliaires conformes à la présente invention est la suppression des effets de bords présents selon l'état de la technique lorsque la commutation d'un pixel en une texture donnée n'est pas complète, c'est à dire qu'il existe à l'intérieur du pixel à commuter une partie de celui-ci dans la texture non désirée. Cet avantage est présent lorsque l'on fait commuter simultanément l'ensemble de l'écran (première étape de l'adressage en deux étapes); ou simultanément une partie seulement de l'écran (adressage partiel), ou lorsque l'on fait commuter une seule ligne de l'écran à la fois (adressage en deux ou une étape).

D'autres caractéristiques, buts et avantages de la présente invention apparaîtront à la lecture de la description détaillée qui va suivre, et en regard des dessins annexés, donnés à titre d'exemples non limitatifs et sur lesquels :
- la figure 1 montre le principe de fonctionnement connu d'un afficheur bistable de type BiNem,
- la figure 2 représente l'écoulement de chute permettant le passage en texture T dans un tel afficheur,
- la figure 3 illustre le principe d'adressage passif multiplexé classique,
- la figure 4 illustre le schéma de principe connu d'électrodes formées sur les deux substrats de verre d'un afficheur. La figure 4a illustre un masque permettant de graver les électrodes sur le substrat dit supérieur, tandis que la figure 4b illustre le masque permettant de graver les électrodes sur le substrat dit inférieur,
- la figure 5 illustre la présence d'un effet de bord (texture U) constatée sur un afficheur classique lors de la commutation de pixels en texture T, ,
- la figure 6 présente la moyenne en z de la vitesse selon x (vitesse moyenne v) en fonction de x, de l'écoulement de chute à l'arrêt d'un signal créneau appliqué à un pixel P d'amplitude V_{P} = 20 Volts,
- la figure 7 indique sur la figure 7a les différents endroits 1, 2, 3 et 4 pour lesquels sont effectuées les simulations présentées sur la figure 8 pour un signal auxiliaire appliqué tel que représenté sur la figure 7b,
- la figure 8 présente la variation de la vitesse moyenne v (moyenne en z de la vitesse selon x) du cristal liquide en fonction du temps, aux 4 endroits 1 2 3 et 4 répertoriés sur la figure 7a,
- la figure 9 montre en fonction du temps, sur la figure 9a, la vitesse moyenne v induite au milieu d'un pixel P par un créneau auxiliaire Vaux illustré sur la figure 9b,
- la figure 10 montre, sur la figure 10a, la vitesse moyenne v au milieu des pixels voisins en fonction du temps pour plusieurs valeurs de la tension quadratique moyenne Vrms appliquée sur les pixels voisins avant l'application de la tension auxiliaire illustrée sur la figure 10b,
- la figure 11 illustre sur la figure 11a un signal auxiliaire de lever sous la forme d'un petit signal créneau de quelques volts appliqué aux pixels voisins via les lignes correspondantes quelques µs avant la descente du signal de commutation Vp appliqué au pixel P via sa ligne uniquement et illustré sur la figure 11b,
- la figure 12 montre l'amplitude de l'écoulement auxiliaire empêchant le passage en T à la chute de tension de Vp à 0. Le diagramme est tracé pour des chutes de tension supérieures de ΔV à la chute minimum de V_{T} induisant le passage en T sans écoulement auxiliaire. L'écoulement auxiliaire est généré par le signal auxiliaire de lever représenté sur la figure 11.
- la figure 13 illustre les effets de bords apparaissant lorsqu'un signal principal classique en créneau est appliqué simultanément sur toutes les lignes d'une zone à commuter en T (lignes n à n+p-1 ; texture T en clair sur la figure). Les colonnes sont au potentiel de référence comme les lignes en dehors de la zone à inscrire. Les zones non adressées de part et d'autre des lignes n à n+p-1 sont en texture U (en sombre sur la figure),
- la figure 14 illustre les effets de bords apparaissant lorsqu'un signal principal classique en créneau est appliqué simultanément sur toutes les lignes d'une zone à commuter en T (lignes n à n+p-1 ; texture T en clair sur la figure). Les colonnes sont au potentiel de référence comme les lignes en dehors de la zone à inscrire. Les zones non adressées de part et d'autre des lignes n à n+p-1 sont en texture T (en clair sur la figure),

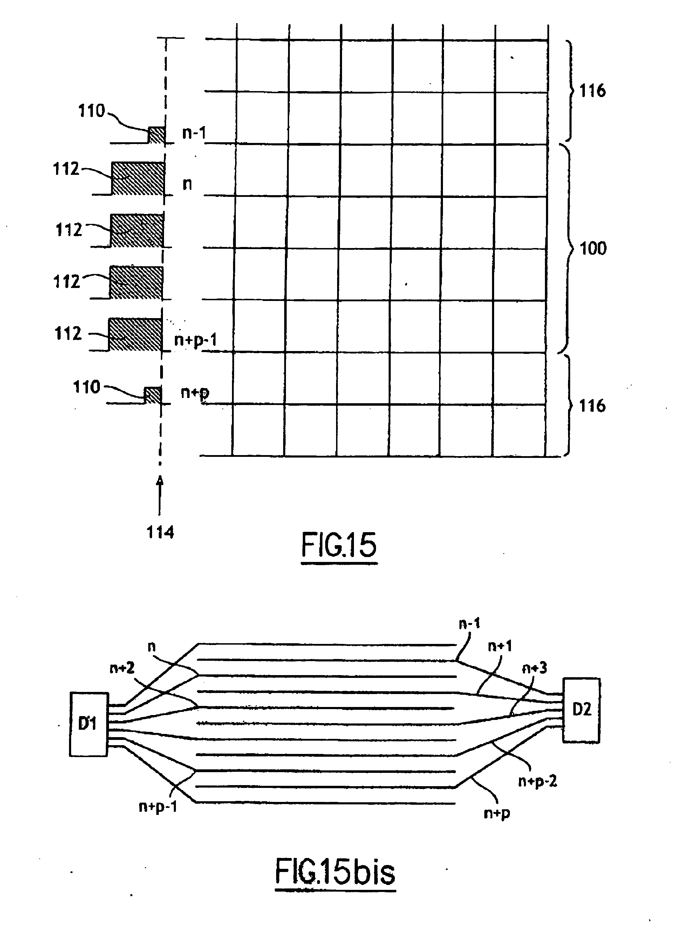

- la figure 15 illustre un exemple d'implémentation de signaux auxiliaires de chute sur les lignes jouxtant une zone à inscrire, pour favoriser le passage en T aux bords de la zone à commuter en T. Plus précisément sur la figure 15 on a représenté en 110 des signaux auxiliaires appliqués à des lignes n-1 et n+p, en 112 des signaux classiques de passage en T, en 114 l'instant des fronts descendants des signaux auxiliaires 110 qui coïncident avec le front descendant actif du signal classique 112 de passage en T, en 100 la zone à inscrire et en 116 les zones déjà inscrites et que l'on ne veut pas modifier, situées sur l'extérieur de la zone à inscrire 100,
- la figure 15 bis représente schématiquement une variante de mise en oeuvre conforme à la présente invention, exploitant deux circuits d'alimentation ou « drivers » qui pilotent des lignes d'électrodes entrelacées,

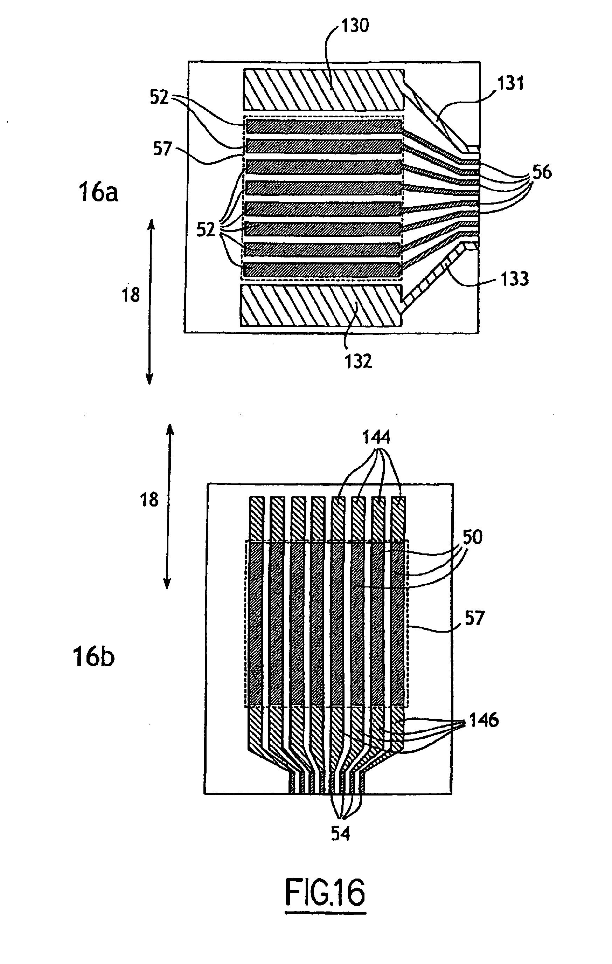

- la figure 16 montre un schéma de principe des électrodes d'un afficheur conforme à la présente invention comportant des blocs d'électrodes connectées jouxtant les lignes extrêmes 1 et N. La figure 16a illustre les électrodes côté lignes, tandis que la figure 16b illustre les électrodes côté colonne, et

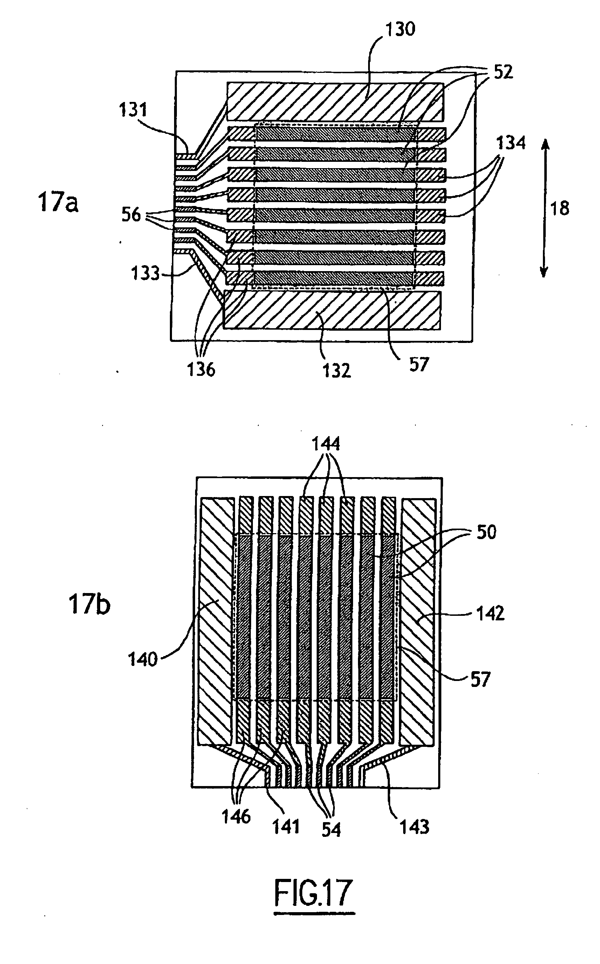

- la figure 17 montre un schéma de principe conforme à la présente invention comportant des blocs d'électrodes connectées jouxtant les lignes extrêmes 1 et N, ainsi qu'un allongement des électrodes de lignes et des électrodes de colonnes de l'afficheur. La figure 17a illustre les électrodes côté lignes, tandis que la figure 17b illustre les électrodes côté colonne.

### DESCRIPTION DETAILLEE DE L'INVENTION

On va par la suite expliciter les études conduites par les inventeurs, à la base de l'invention, avant de présenter différents exemples de mise en oeuvre de celle-ci.

### Etude de l'écoulement issu des pixels voisins

Nous allons à présent expliciter la manière dont un écoulement issu d'un pixel voisin ou écoulement auxiliaire, diffuse dans un pixel à commuter, en partant à titre d'exemple de pixels mis tous préalablement dans l'état T :

### a) effet de la distance

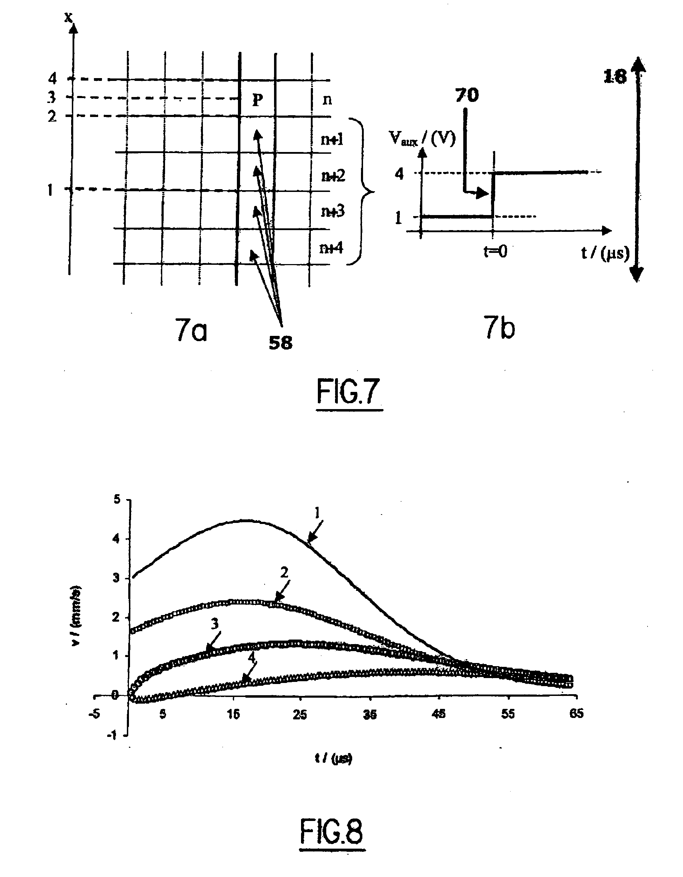

La figure 8 montre, en fonction du temps, la moyenne en z de la vitesse selon x du cristal liquide (v) en quatre points d'une cellule, ces quatre points étant répertoriés sur la figure 7a. Cet écoulement est créé par un signal auxiliaire Vaux formé d'un échelon de 3 volts ajouté à un signal constant de 1 volt comme illustré sur la figure 7b. L'échelon est appliqué simultanément sur 4 pixels voisins 58 contigus d'un pixel P situé sur la ligne n, dans une cellule de 1.5 µm d'épaisseur (figure 7) via les lignes correspondantes (n+1 à n+4).. Sur la figure 8, la courbe 1 donne la vitesse moyenne à une distance suffisamment éloignée du pixel P, par exemple à une distance de 2.5 pixels par rapport au centre du pixel P du côté des quatre pixels voisins recevant le signal auxiliaire. La courbe 2 donne la vitesse moyenne au bord du pixel P situé du côté des pixels voisins recevant le signal auxiliaire. La courbe 3 donne la vitesse moyenne au milieu du pixel P. La courbe 4 donne la vitesse moyenne du cristal liquide au bord du pixel P situé du côté opposé aux pixels voisins recevant le signal auxiliaire. La figure 8 est le résultat de simulations numériques.

Dans le pixel P, apparaît ainsi un écoulement auxiliaire de lever selon x induit par le lever des pixels voisins sous l'action de la montée du signal auxiliaire 70 (front montant). Cet écoulement s'atténue au fur et à mesure qu'il s'éloigne de sa source, et diffuse dans le pixel P depuis les pixels voisins où il est généré.

### b) effet de la descente

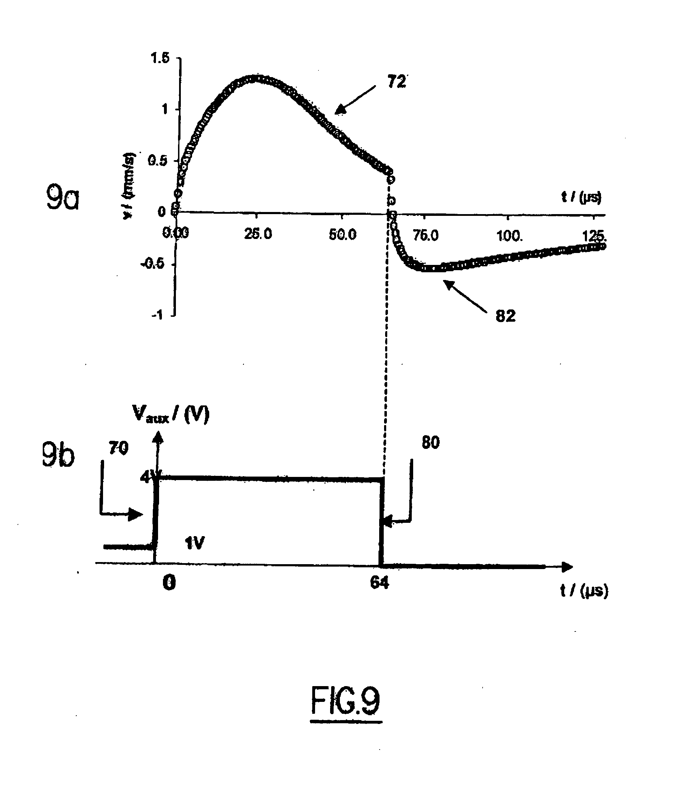

De la même manière, à l'arrêt brutal du signal auxiliaire (front descendant), un écoulement auxiliaire de chute est généré. La figure 9a montre en fonction du temps, la vitesse moyenne v induite au milieu du pixel P par un créneau auxiliaire Vaux appliqué sur les quatre pixels voisins précités. Le créneau de 4 volts formant le signal auxiliaire est appliqué pendant 64 µs sur les pixels voisins précités levés au préalable par un signal de 1 volt comme illustré sur la figure 9b.

Le pixel P voit d'abord un écoulement auxiliaire de lever 72 positif (selon x) déclenché par la montée 70 du signal auxiliaire, puis un écoulement auxiliaire de chute 82 négatif déclenché par la descente brutale 80 du signal auxiliaire. La vitesse induite au moment de l'arrêt du signal auxiliaire est plus faible en valeur absolue et de signe contraire (selon -x) à la vitesse induite au lever.

### c) effet de l'état de départ des pixels voisins

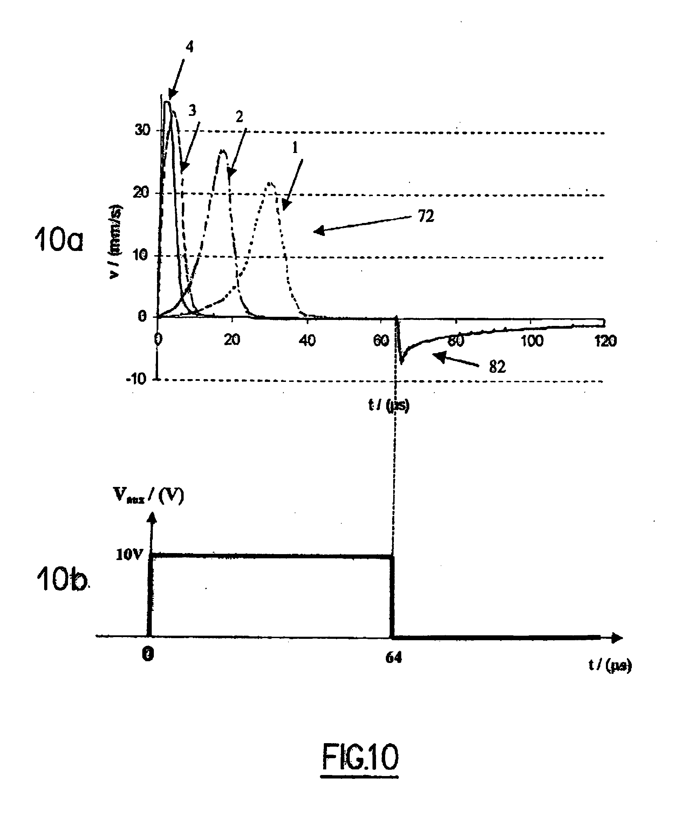

La figure 10a montre la vitesse moyenne au milieu des pixels voisins en fonction du temps pour plusieurs valeurs de la tension quadratique moyenne Vrms appliquée sur les pixels voisins avant l'application du signal auxiliaire illustré sur la figure 10b (courbe 1 : Vrms = 0V; courbe 2 : Vrms = 0,7 volt; courbe 3 : Vrms = 1 volt; courbe 4 Vrms = 1,4 volt). Le signal auxiliaire tel qu'illustré sur la figure 10b est un créneau de 10V et de durée 64µs appliqué sur les quatre pixels voisins 58 comme précédemment. La tension moyenne Vrms appliquée avant le signal auxiliaire a permis un lever préalable des molécules. Ce lever est fonction de la valeur de Vrms.

On constate qu'en fonction de Vrms, l'amplitude de la vitesse moyenne de l'écoulement auxiliaire de lever 72 au centre des pixels voisins varie mais surtout que l'instant du maximum de cette vitesse se décale sensiblement. Pour utiliser efficacement l'écoulement auxiliaire de lever 72, il faut tenir compte de ce phénomène et donc ajuster le décalage temporel entre la montée 70 du signal auxiliaire et le signal de commutation du pixel P.

On constate aussi que la vitesse moyenne de l'écoulement auxiliaire de chute 82 ne dépend pas de Vrms.

### d) sens de l'effet de l'écoulement auxiliaire

L'écoulement auxiliaire de lever, provoqué par le front montant du signal auxiliaire, est positif (selon x) et donc en sens contraire de l'écoulement de chute 32 près de la lame maître 20 dans le pixel P (selon -x), lequel écoulement de chute seul induirait le passage en T de celui-ci. L'écoulement auxiliaire de lever des pixels voisins s'oppose à l'écoulement de chute et favorise donc le passage en U du pixel P.

L'écoulement auxiliaire de chute provoqué par le front descendant du signal auxiliaire est négatif (selon -x), et donc dans le même sens que l'écoulement de chute 32 du pixel P, lequel écoulement de chute seul induirait le passage en T de celui-ci. L'écoulement auxiliaire de chute des pixels voisins aide donc le passage en T du pixel P.

### e) exemple d'efficacité de l'écoulement auxiliaire

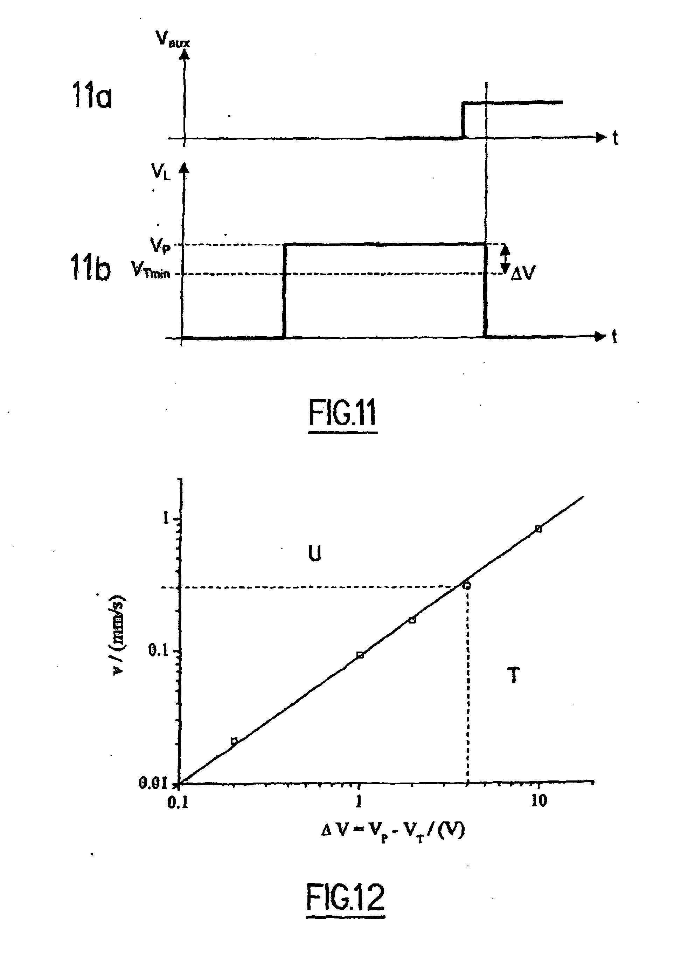

La figure 12 montre l'amplitude de l'écoulement auxiliaire de lever empêchant le passage en T du pixel P alors que la chute Vp à 0 est supérieure de ΔV à la chute nécessaire au passage en T sans signal auxiliaire V_{Tmin}.. On voit sur cette courbe l'efficacité du signal auxiliaire. Ici V_{Tmin} = 16V. Pour V_{P}=20 V, AV= 4V. La courbe figure 12 indique une vitesse de 0.3 mm/s pour bloquer le passage en T On a vu sur la figure 6 qu'une chute de tension Vp de 20 V crée un écoulement de -8mm/s. Celui-ci est ainsi contré par un écoulement auxiliaire de 0.3 mm/s.
Ainsi, le front montant du signal auxiliaire placé en avance (de 0 voire quelques µs à quelques dizaines de µs à température ambiante et de quelques dizaines à centaines de µs à froid) par rapport au font descendant actif du signal Vp permet d'empêcher le passage en T et donc d'obtenir la texture U. Le front descendant de Vp actif est ici celui destiné à générer un écoulement de chute 32 suffisant pour obtenir la texture T,
De manière générale, l'ajustement de l'instant des fronts montant ou descendant du signal auxiliaire par rapport au front descendant actif du signal Vp (destiné à choisir la texture), permet de contrôler la texture finale dans l'ensemble du pixel P.

Lorsqu'au départ tous les pixels sont dans l'état U, des phénomènes de même type existent, mais ne seront pas détaillés ici afin de ne pas alourdir l'exposé.

La présente invention offre de nombreux avantages. Sans caractère limitatif on citera l'avantage suivant : pendant la première étape d'un adressage passif en deux étapes d'un ensemble continu de lignes (adressage d'une zone de l'écran ou adressage partiel), l'invention permet la suppression des effets de bord pendant la commutation (en T) d'une zone. Une variante de l'invention est l'utilisation d'une « bordure » active pour supprimer les effets de bords sur les lignes extrêmes de l'écran.

### Exemple de mise en oeuvre de l'invention : suppression de l'effet de bord pendant la commutation en T d'un ensemble continu de lignes

### Cas de l'adressage passif et partiel

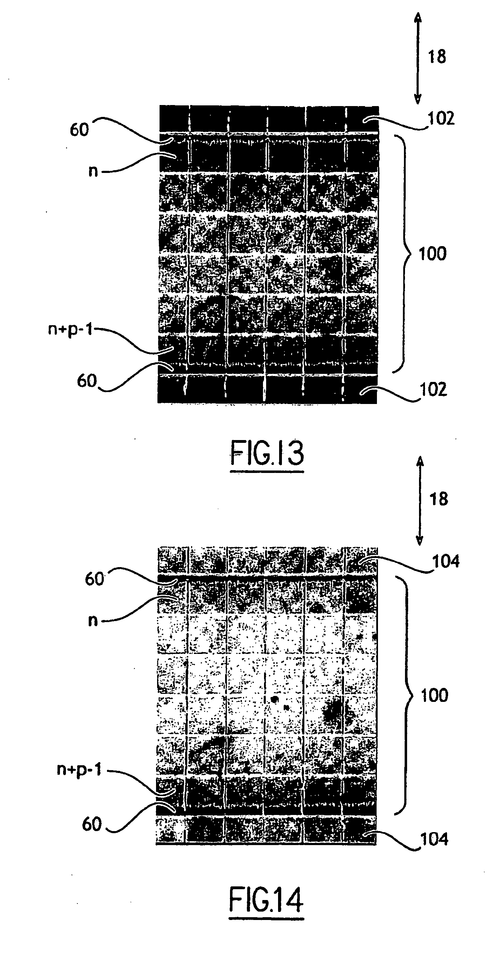

Dans ce premier exemple l'invention permet de supprimer l'effet de bord visible dans des afficheurs classiques antérieurs et illustré sur les figures 13 et 14.

Sur les figures 13 et 14 on a référencé :
- 18 la direction de l'écoulement de chute (ici parallèle à la direction de brossage),
- 60 les effets de bord,
- 100 la zone inscrite en texture T,
- arbitrairement n et n+p-1 les lignes extrêmes de cette zone inscrite 100, et
- respectivement sur la figure 13 : 102 les zones en texture U non adressées, situées à l'extérieur de la zone inscrite 100 et sur la figure 14 : 104 les zones en texture T non adressées, situées à l'extérieur de la zone inscrite 100.

Le défaut de bord précité 60 apparaît, si l'invention n'est pas utilisée, sur les bords extérieurs des premières et dernières lignes d'une zone 100 de p lignes, de n à n+p-1, qui commute collectivement en T (voir paragraphe précédent sur l'effet de bord de l'état de la technique). Le raisonnement est également valable pour p=1, c'est-à-dire une seule ligne qui commute en T. La direction de brossage 40 est perpendiculaire aux lignes (brossage orthogonal).

Une commutation collective en T de p lignes est utilisée comme la première étape lors d'un adressage en deux étapes d'une zone 100 donnée de p lignes d'un écran, zone 100 que l'on souhaite inscrire, le contenu des autres lignes 102, 104 restant inchangé (adressage partiel).

Dans le cas des figures 13 et 14, un signal principal classique en créneau (donné ici à titre d'exemple mais non limitatif) est appliqué simultanément sur toutes les lignes de la zone 100 à commuter en T. Les colonnes sont au potentiel de référence comme les lignes en dehors de la zone 100 à inscrire. On voit que l'effet de bord 60 apparaît quelle que soit la texture des pixels 102, 104 non adressés (U sur la figure 13 ou T sur la figure 14) jouxtant la zone de commutation 100 dans la direction 18.

Pour supprimer les effets de bord 60 sur l'ensemble de la ligne n et de la ligne n+p-1, il suffit, selon l'invention, d'appliquer sur leurs lignes voisines selon la direction de l'écoulement telles que définies précédemment, à l'extérieur de la zone à commuter 100 (par exemple les lignes n-1 et n+p) un signal auxiliaire correctement placé par rapport au front descendant actif de Vp.
On peut également appliquer le signal auxiliaire via les colonnes, en appliquant simultanément un signal auxiliaire à toutes les colonnes, préférentiellement de polarité opposée au signal de commutation ligne pour minimiser la perturbation de ces lignes. Comme décrit précédemment, c'est un signal auxiliaire de chute qui favorise le passage en T. Ce signal auxiliaire peut être par exemple un créneau dont l'amplitude est inférieure à la tension de cassure et dont le front descendant coïncide (ou précède) à par exemple 10 µs près à température ambiante (cette valeur pouvant varier sensiblement avec la température) avec le front descendant, qui est ici le front actif, du créneau classique appliqué sur la zone 100 à commuter (cf figure 15). Le signal auxiliaire ne fait pas commuter les lignes voisines , donc ne perturbe pas l'information affichée sur ces lignes. Cependant l'écoulement de chute induit, dans la zone 100 à commuter en T, par le mouvement des molécules dans les lignes voisines, est suffisant pour aider la commutation et faire commuter en T les bords de zone.

La deuxième étape de l'adressage s'effectue de façon classique ligne par ligne, par activation des lignes n à n+p-1. Pendant le temps d'activation d'une ligne, un signal est appliqué simultanément sur les colonnes, afin d'obtenir pour chaque pixel de la ligne activée un passage T vers U, ou T vers T ou bien T vers une coexistence de U et de T (niveaux de gris).

On va maintenant décrire, en regard de la figure 15bis, une variante de mise en oeuvre conforme à la présente invention qui utilise deux circuits ou « drivers » D1 et D2, qui pilotent des lignes d'électrodes entrelacées.

Pour effectuer l'adressage partiel d'une zone entre la ligne n et la ligne n+p-1, on constate que la mise en oeuvre du procédé décrit ci-dessus nécessite d'appliquer simultanément, lors de la première étape, d'une part une tension élevée aux lignes n à n+p-1 pour réaliser la commutation en T de ces lignes, et d'autre part une tension plus faible aux lignes voisines n-1 et n+p, afin de ne pas modifier l'information inscrite sur ces lignes.

Cependant ceci n'est pas possible avec des drivers standards disponibles dans le commerce, initialement développés pour le mode STN, et que l'on souhaite utiliser pour les afficheurs bistables pour des raisons de coût. Ces drivers fonctionnent en effet de la manière suivante : ils ne peuvent délivrer simultanément que deux types de tensions : (+V ou -V) pour la tension d'activation ligne et Vm, qui est la tension que l'on applique sur les lignes non activées. Il n'est donc pas possible avec ces drivers standards d'appliquer simultanément un signal d'activation 112 et un signal auxiliaire 110 différent, dans le cas présent de tension plus faible.

Pour pallier à cette difficulté, les inventeurs proposent dans le cadre de la présente invention, comme schématisé sur la figure 15bis, d'utiliser au moins deux drivers standards D1 et D2 agencés, dans leur liaison avec les électrodes de lignes, pour assurer un adressage à lignes entrelacées associé à un procédé d'adressage spécifique : au niveau du « design » des électrodes de l'afficheur, les lignes d'une même parité (pair ou impair) sont connectées à un driver D1 et les lignes de l'autre parité sont connectées à un autre driver D2 par exemple situé de l'autre côté de la zone d'affichage par rapport à D1, tel que représenté sur la figure 15bis. Ainsi, deux lignes voisines n et n+1 ne sont pas connectées au même driver mais à deux drivers différents..

Au niveau du mode d'adressage, la première étape E1 (commutation collective des lignes n à n+p-1, par exemple en texture T) est divisée en deux sous étapes E'1 et E" 1 :
- Pendant E'1, on envoie simultanément un signal de passage en T 112 (V1 ou -V1) sur le driver D1, sur les lignes n, n+2, ... n+p-1 (n et n+p-1 devant ici avoir impérativement la même parité), les autres lignes connectées au driver D1 recevant Vm, et sur le driver D2 on envoie un signal de passage en T 112 (V1 ou -V1) pour les lignes n+1, n+3.....n+p-2, les autres lignes connectées au driver D2 recevant Vm . On obtient ainsi une zone entre n et n+p-1 en T avec un effet de bord tel que décrit précédemment.
- Puis dans une deuxième sous étape E"1, le signal de passage en T 112 (V1 ou -V1) est appliqué sur les lignes extrêmes n et n+p-1 via le driver D1, les autres lignes connectées au driver D1 recevant Vm., et simultanément on applique un signal auxiliaire 110 (Vaux ou -Vaux) sur les lignes voisines de n (n-1 et/ou n+1) et voisines de n+p-1 (n+p-2 et/ou n+p) via le driver D2, les autres lignes connectées au driver D2 recevant Vm, et ce afin de faire disparaître l'effet de bord selon le principe précédemment décrit.

Avec ce procédé on utilise les deux drivers standards D1 et D2 pour appliquer simultanément V1 et Vaux aux lignes adéquates. Cette variante de la présente invention permet ainsi une mise en oeuvre optimale avec des drivers standards et économiques.

### Cas de l'adressage passif et complet de l'écran

Lors de l'adressage en deux étapes tel que décrit dans le paragraphe précédent, mais cette fois-ci de la totalité de l'écran (de la ligne 1 à N), l'effet de bord 60 précédemment décrit est naturellement visible sur les lignes extrêmes : 1 et N.

Pour palier cet inconvénient, différentes solutions peuvent être envisagées.

Une première option est de « sacrifier » quelques lignes extrêmes pour constituer une zone « bordure », auxquelles on applique un signal auxiliaire, et qui ne sont pas utilisées pour afficher le contenu de l'image. L'effet de bord 60 est alors rejeté à l'extrémité de la zone bordure, qui peut être masquée par une coque du produit dans lequel est intégré l'afficheur.

Dans les écrans bistables, il est difficile de maîtriser la texture en dehors des zones adressées. Afin de réaliser tout autour de la zone d'affichage une zone possédant une texture maîtrisée on peut également, en plus des lignes, « sacrifier » quelques colonnes de l'écran de part et d'autre de la zone d'affichage. Le nombre de lignes et de colonnes utiles pour l'affichage est diminué, mais l'image est entourée d'une zone homogène de même teinte.

Une deuxième option, si l'on souhaite conserver l'ensemble des lignes et des colonnes pour afficher l'image, est de rendre adressable, par l'adjonction de blocs d'électrodes connectées, les zones jouxtant les lignes extrêmes (lignes 1 et N) perpendiculaires à la direction de brossage 18. Ces blocs « bordure » sont, comme les lignes et les colonnes de la zone matricielle, continués par des pistes assurant la connexion aux drivers ou à une source externe de tension. Lors de l'adressage de la zone d'affichage, il suffit d'appliquer un signal auxiliaire aux blocs « bordure » via les pistes correspondantes en synchronisation avec l'adressage des lignes périphériques extrêmes précitées, tel que décrit pour l'adressage partiel. L'écoulement de chute généré par les blocs « bordures » permet un basculement en T des zones d'affichage extrêmes susceptibles de montrer un effet de bord si aucun signal auxiliaire n'était appliqué. L'effet de bord est rejeté à l'extrémité des blocs « bordures » et est masqué par la coque du produit dans lequel est intégré l'afficheur.

Pour ces deux options, on peut envisager de passer la zone bordure dans une texture donnée, par exemple la texture T, une fois pour toute, par exemple à la sortie de l'usine de production. Le signal auxiliaire est donc un signal de faible amplitude qui ne casse pas l'ancrage et ne réalise pas un re-passage en T de la zone bordure.

Dans les deux options précédemment décrites, on obtient au pourtour de l'écran un cadre homogène.

Au niveau de la structure des électrodes de l'afficheur, ces blocs peuvent être réalisés de différentes manières :
Une première manière constituant un exemple non limitatif et illustré sur la figure 16, est de réaliser sur le substrat sur lequel sont situées les lignes 52, et plus précisément respectivement sur l'extérieur de chacune des lignes extrêmes 52, un bloc « plein » 130, 132, chacun de ces blocs 130, 132 opérant pour la ligne extrême qui lui est contigüe (figure 16a) et sur l'autre substrat en regard du premier substrat, d'allonger chacune des bandes d'électrodes de colonne 50 de la zone matricielle, respectivement à chacune de ses deux extrémités, par des prolongements 144, 146 situés en regard des blocs précités 130, 132 (figure 16b). Les blocs 130, 132 se continuent par des pistes 131, 133 qui rejoignent les pistes 56 correspondant à celles de la zone matricielle 57 pour la connexion au driver. Les blocs 144, 146 sont eux reliés aux électrodes de colonne 50 et par conséquent pilotés par les pistes 54. Il suffit alors d'envoyer un signal auxiliaire, via ces pistes 131, 133, aux blocs « bordures » 130, 133 en synchronisation avec l'adressage des lignes périphériques extrêmes de la zone d'affichage 57 et l'effet de bord sur ces lignes disparaît.

De manière à obtenir un cadre complet dont on maîtrise la texture, comme décrit précédemment, on peut étendre la structure d'électrodes précédentes à l'ensemble de la périphérie de la zone matricielle 57, tel qu'illustré sur la figure 17. Sur chaque substrat (figures 17a et 17b), il est ajouté des blocs pleins 130, 132 et 140, 142 reliés à des pistes 131, 133 et 141, 143 et les bandes d'électrodes 52 et 50 sont allongées sous forme de prolongements 134, 136 et 144, 146 situés respectivement en regard des blocs précités 130, 132 et 140, 142, le principe d'adressage restant le même.

On notera en particulier que le mode de pilotage à lignes entrelacées décrit précédemment est compatible avec l'ensemble des variantes conformes à l'invention.

Pour l'ensemble des signaux décrits pour cette invention, les signaux lignes et colonnes peuvent être soit monopolaires soit bipolaires, tels que décrits par exemple dans le document [6]. La tension de référence n'est pas nécessairement égale à 0 volts, certains drivers d'écrans fonctionnant avec une masse virtuelle.

L'invention peut être appliquée à un adressage actif, avec plus de liberté du fait de l'indépendance des signaux colonnes appliqués aux pixels d'une même colonne mais de lignes différentes.

### Documents cités

Doc [1]: US 6327017
Doc [2]: I. Dozov et al, "Recent improvements of bistable nematic displays switched by anchoring breaking (BiNem)", Proceeding SID 2001, p 224-227
Doc [3] :P. Martinot Lagarde et al , SPIE vol. 5003 (2003), p25-34
Doc [4]: M.Giocondo, I.Lelidis, I.Dozov, G.Durand, Eur. Phys. J.AP5, 227 (1999)
Doc [5] : : I. Dozov, Ph. Martinot-Lagarde, Phys. Rev. E., 58, 7442 (1998).
Doc [6] : FR 2 835 644
Doc[7] : US 2006-0022919
Doc [8] : US 7067180
Doc [9] : WO 2004/104980

## Revendications

1. Procédé de commande d'un afficheur à cristal liquide nématique bistable à cassure d'ancrage, ledit afficheur comprenant deux textures cristal liquide stables, l'une uniforme ou faiblement tordue (U) dans laquelle les molécules sont sensiblement parallèles entre elles et l'autre à torsion (T) qui diffère de la première par une torsion d'environ +/- 180°à +/- 15° près et comprenant une matrice de pixels agencés en lignes et colonnes croisées dans lequel une commutation d'état des molécules de cristal liquide d'un pixel vers une texture choisie, pouvant être uniforme ou faiblement tordue (U), ou à torsion (T) ou une coexistence des deux textures, est pilotée par application d'un signal électrique de commande entre deux électrodes (50, 52) encadrant chaque pixel comprenant une tension supérieure à la tension de cassure d'ancrage puis un front descendant actif permettant l'obtention de ladite texture choisie, ladite commutation vers une texture choisie s'effectuant en deux étapes, une première étape où est effectuée de manière collective la commutation de tous les pixels d'un groupe de p lignes, correspondant aux ligne n à n+p-1, p étant supérieur ou egal à 1, vers la texture torsion (T) et une deuxième étape où lesdites p lignes dudit groupe sont activées une par une pour commuter tous les pixels desdites p lignes vers la texture choisie, ladite commutation faisant intervenir un écoulement selon une direction déterminée (18) proche de la direction de brossage, **caractérisé par le fait qu'**il comprend, pour contrôler la commutation de certains au moins des pixels (P) dudit groupe de p lignes, une étape consistant à appliquer sur au moins un pixel (58) voisin selon la direction d'écoulement d'un pixel (P) dont la commutation doit être contrôlée par le signal électrique de commande, l'au moins un pixel voisin étant situé à l'extérieur du groupe des p lignes à commuter, des signaux électriques auxiliaires adaptes pour induire dans ledit pixel voisin un écoulement auxiliaire parallèle à ladite direction, lesdits signaux auxiliaires étant appliqués lors de la première étape de la commutation vers une texture choisie, dont l'amplitude est inférieure à la tension de assure d'ancrage, dont les fronts descendants sont temporellement placés en avance ou en coïncidence par rapport au front descendant actif du signal électrique de commande, le décalage temporel des fronts descendants des signaux électriques auxiliaires par rapport au front descendant actif du signal électrique de commande étant compris entre 0 et quelques dizaines de µs à température ambiante.

2. Procédé selon la revendication 1, **caractérisé par le fait que** lesdits signaux électriques auxiliaires sont appliqués simultanément sur plusieurs pixels voisins (58).

3. Procédé selon l'une des revendications 1 à 2, **caractérisé par le fait que** lesdits signaux électriques auxiliaires appliqués sur au moins un pixel voisin (58) sont des signaux appliqués entre deux électrodes dudit pixel voisin, et formés de tensions électriques appliquées soit sur une électrode de ligne par rapport à une référence sur une électrode de colonne, soit sur électrode de colonne par rapport à une référence sur une électrode de ligne, soit entre une électrode de ligne et une électrode de colonne.

4. Procédé selon l'une des revendications 1 à 3, **caractérisé par le fait que** lesdits signaux électriques auxiliaires appliqués sur au moins un pixel voisin (58) sont des signaux monopolaires.

5. Procédé selon l'une des revendications 1 à 4, **caractérisé par le fait que** lesdits signaux électriques auxiliaires appliqués sur au moins un pixel voisin (58) sont des signaux bipolaires.

6. Procédé selon l'une des revendications 1 à 5, **caractérisé par le fait que** la direction de brossage (40) des substrats (10, 20) de l'afficheur est perpendiculaire à des électrodes de ligne (52) et que les signaux électriques auxiliaires comprennent des signaux appliqués sur les électrodes de colonne (50) et placés temporellement par rapport au front descendant actif du signal électrique de commande.

7. Procédé selon l'une des revendications 1 à 6, **caractérisé par le fait que** les signaux électriques auxiliaires comprennent des signaux appliqués sur au moins une électrode de ligne (52) adjacente au pixel (P) à contrôler.

8. Procédé selon l'une des revendications 1 à 7, **caractérisé par le fait que** le décalage temporel d'un front des signaux électriques auxiliaires par rapport au front descendant actif du signal électrique de commande est compris entre 0 et 50 µs, de préférence entre 0 et 10 µs, très préférentiellement entre 5 µs et 10 µs.

9. Procédé selon l'une des revendications 1 à 8, **caractérisé par le fait que** le signal électrique auxiliaire est un signal appliqué sur au moins une ligne voisine.

10. Procédé selon l'une des revendications 1 à 9, **caractérisé par le fait que** le signal électrique auxiliaire est un signal appliqué sur plusieurs lignes voisines.

11. Procédé selon l'une des revendications 1 à 10, **caractérisé par le fait qu'**il est appliqué à un afficheur à adressage actif.

12. Procédé selon l'une des revendications 1 à 11, **caractérisé par le fait qu'**il met en oeuvre deux circuits de pilotage ou drivers (D1, D2) reliés alternativement à des électrode de lignes entrelacées (n, n+2,...n+p-1 ; n+1, n+3,...n+p-2) de manière à ce que deux lignes voisines quelconques n et n+1 soient connectées à deux drivers différents.

13. Procédé selon la revendication 12, **caractérisé par** le par le fait que les deux drivers (D1, D2) sont utilisés, au moins pendant certaines séquences de fonctionnement, pour appliquer simultanément et respectivement d'une part des signaux d'activation sur certaines lignes et d'autre part des signaux électriques auxiliaires sur certaines autres lignes.

14. Procédé selon l'une des revendications 12 ou 13, **caractérisé par le fait que** la première étape (E1) de commutation collective des lignes (n à n+p-1), dans une texture, T est divisée en deux sous étapes (E'1 et E"1) :
- Pendant une première sous étape (E'1), un premier driver (D1) envoie simultanément un signal (112) de passage dans ladite texture (T) sur les lignes qui lui sont connectées concernées par la commutation collective (n, n+2, ... n+p-1) et un signal Vm sur les autres lignes connectées au premier driver (D1), tandis que le deuxième driver (D2) envoie simultanément un signal (112) de passage dans ladite texture (T) sur les lignes qui lui sont connectées concernées par la commutation collective (n+1, n+3.....n+p-2), et un signal Vm sur les autres lignes connectées au deuxième driver (D2),
- Puis dans une deuxième sous étape (E"1), le premier driver (D1) applique simultanément un signal (112, V1 ou -V1) de passage dans ladite texture (T) sur les lignes extrêmes qui lui sont connectées concernées par la commutation collective (n et n+p-1) et un signal Vm sur les autres lignes connectées au premier driver (D1), tandis que le deuxième driver (D2) envoie simultanément un signal électrique auxiliaire (110 ; Vaux ou -Vaux) sur les lignes (n-1 et/ou n+1 ; n+p-2 et/ou n+p) voisines des lignes extrêmes qui sont concernées par la commutation collective (n et n+p-1) et un signal Vm sur les autres lignes connectées au deuxième driver (D2).

15. Procédé selon la revendication 12, **caractérisé par le fait que** les deux drivers (D1, D2) sont utilisés, au moins pendant certaines séquences de fonctionnement, pour appliquer sur des lignes respectives, des signaux d'activation qui se chevauchent temporellement.

16. Afficheur à cristal liquide nématique bistable à cassure d'ancrage comprenant deux textures cristal liquide stable, l'une uniforme ou faiblement tordue dénommée U dans laquelle les molécules sont sensiblement paralléles entre elles et l'autre dénommée T qui diffère de la première par une torsion d'environ +/- 180° à +/- 15° près et comprenant une matrice de pixels agencés en lignes et colonnes croisées dans lequel une commutation d'état des molécules de cristal liquide d'un pixel vers une texture choisie, U ou T ou une coexistence des deux textures, est pilotée par application d'un signal étectrique de commande entre deux électrodes (50, 52) encadrant chaque pixel comprenant une tension supérieure à la tension de cassure d'ancrage puis un front descendant actif permettant l'obtention de ladite texture choisie, ladite commutation vers une texture choisie s'effectuant en deux étapes, une première étape où est effectuée de manière collective la commutation de tous les pixels d'un groupe de p lignes, correspondant aux ligne n à n+p-1, p étant supérieur ou égal à 1, vers la texture T et une deuxième étape où lesdites p lignes dudit groupe sont activées une par une cour commuter tous les pixels desdites p lignes vers la texture choisie, ladite commutation, faisant, intervenir un écoulement selon une direction déterminée (18), **caractérisé par le fait qu'**il comprend pour contrôler la commutation de certains au moins des pixels (P) dudit groupe de p lignes, des moyens appliquant sur au moins un pixel (58) voisin, selon la direction d'écoulement, d'un pixel (P) dont la commutation doit être contrôlée par le signal électrique de commande, l'au moins un pixel voisin étant situé à l'extérieur du groupe des p lignes à commuter, des signaux électriques auxiliaires adaptés pour induire dans ledit pixel voisin un écoulement auxiliaire parallèle à ladite direction, lesdits signaux auxiliaires étant appliqués lors de la premièrs étape de la commutation vers une texture choisie, dont l'amplitude est inférieure à la tension de cassure d'ancrage, dont les fronts descendant sont temporellement placés en avance ou en coïncidence par rapport au front descendant actif du signal électrique de commande, le décalage temporel des fronts descendants des signaux électriques auxiliaires par rapport au front descendant actif du signal électrique de commande étant compris entre 0 et quelques dizaines de us à température ambiante

17. Afficheur selon la revendication 16, **caractérisé par le fait qu'**il comprend des électrode lignes et/ou colonnes et/ou des blocs de bordures situés en dehors de la zone d'affichage.

18. Afficheur selon les revendications 16 et 17, **caractérisé par le fait qu'**il comprend des électrodes lignes et/ou colonnes et/ou des blocs de bordures situés en dehors de la zone d'affichage dont l'état est imposé à la fabrication.

19. Afficheur selon l'une des revendications 16 à 18, **caractérisé par le fait qu'**il comprend des électrode lignes et/ou colonnes et/ou des blocs de bordures situés en dehors de la zone d'affichage dont l'état est commandé par des signaux auxiliaires.

## Patentansprüche

1. Verfahren zum Steuern einer bistabilen nematischen Flüssigkeitskristallanzeige mit Verankerungsbruch, wobei die Anzeige zwei stabile Flüssigkeitskristalltexturen umfasst, eine gleichförmige oder leicht verdrehte (U), in der die Moleküle etwa parallel zueinander sind, und die andere verdreht (T), die sich von der ersten durch eine Verdrehung von zirka +/- 180° mit +/- zirka 15° unterscheidet und eine Matrix aus Pixeln umfasst, die in gekreuzten Zeilen und Spalten ausgebildet sind, wobei eine Zustandsumschaltung der Flüssigkeitskristallmoleküle eines Pixels zu einer ausgewählten Textur, die gleichförmig oder leicht verdreht (U) oder verdreht (T) sein kann, oder einer Koexistenz der zwei Texturen durch Anwendung eines elektrischen Steuersignals zwischen zwei Elektroden (50, 52), die jedes Pixel umgeben, gesteuert wird, mit einer Spannung über der Verankerungsbruchspannung, gefolgt von einer aktiven abfallenden Front, die den Erhalt der gewählten Textur erlaubt, wobei die Umschaltung zu einer gewählten Textur in zwei Schritten erfolgt, einem ersten Schritt, bei dem die Umschaltung aller Pixel einer Gruppe von p Zeilen, die den Zeilen n mit n+p-1 entspricht, wobei p größer oder gleich 1 ist, zur Verdrehungstextur (T) kollektiv erfolgt, und einem zweiten Schritt, bei dem die p Zeilen der Gruppe einzeln aktiviert werden, um alle Pixel der p Zeilen zu der gewählten Textur umzuschalten, wobei die Umschaltung zu einem Fluss in eine bestimmte Richtung (18) führt, die etwa der Bürstenrichtung entspricht, **dadurch gekennzeichnet, dass** es zur Überwachung der Umschaltung mindestens bestimmter Pixel (P) der Gruppe von p Zeilen einen Schritt umfasst, der darin besteht, auf mindestens ein Pixel (58), das gemäß der Fließrichtung einem Pixel (P) benachbart ist, dessen Umschaltung von dem elektrischen Steuersignal kontrolliert werden muss, wobei sich das mindestens eine benachbarte Pixel außerhalb der Gruppe der umzuschaltenden Zeilen p befindet, elektrische Hilfssignale anzuwenden, die geeignet sind, in das benachbarte Pixel einen Hilfsfluss parallel zu besagter Richtung zu induzieren, wobei die Hilfssignale während des ersten Umschaltschritts zu einer gewählten Textur angewendet werden, wobei die Amplitude kleiner ist als die Verankerungsbruchspannung, wobei die abfallenden Fronten im Verhältnis zur aktiven abfallenden Front des elektrischen Steuersignals temporär vor oder übereinstimmend platziert sind, wobei der zeitliche Versatz der abfallenden Fronten der elektrischen Hilfssignale im Verhältnis zur aktiven abfallenden Front des elektrischen Steuersignals bei Raumtemperatur zwischen 0 und einigen Dutzend µs inklusive beträgt.

2. Verfahren nach Anspruch 1, **dadurch gekennzeichnet, dass** die elektrischen Hilfssignale gleichzeitig auf mehrere benachbarte Pixel (58) angewendet werden.

3. Verfahren nach einem der Ansprüche 1 bis 2, **dadurch gekennzeichnet, dass** die auf mindestens ein benachbartes Pixel (58) angewendeten elektrischen Hilfssignale Signale sind, die zwischen zwei Elektroden des benachbarten Pixels angewendet und von elektrischen Spannungen gebildet werden, die entweder auf eine Zeilenelektrode im Verhältnis zu einem Bezug auf eine Spaltenelektrode oder auf eine Spaltenelektrode im Verhältnis zu einem Bezug auf eine Zeilenelektrode oder zwischen einer Zeilenelektrode und einer Spaltenelektrode angewendet werden.

4. Verfahren nach einem der Ansprüche 1 bis 3, **dadurch gekennzeichnet, dass** die auf mindestens ein benachbartes Pixel (58) angewendeten elektrischen Hilfssignale monopolare Signale sind.

5. Verfahren nach einem der Ansprüche 1 bis 4, **dadurch gekennzeichnet, dass** die auf mindestens ein benachbartes Pixel (58) angewendeten elektrischen Hilfssignale bipolare Signale sind.

6. Verfahren nach einem der Ansprüche 1 bis 5, **dadurch gekennzeichnet, dass** die Bürstenrichtung (40) der Substrate (10, 20) der Anzeige lotrecht zu Zeilenelektroden (52) ist und dass die elektrischen Hilfssignale Signale umfassen, die auf die Spaltenelektroden (50) angewendet werden und temporär im Verhältnis zur aktiven abfallenden Front des elektronischen Steuersignals platziert sind.

7. Verfahren nach einem der Ansprüche 1 bis 6, **dadurch gekennzeichnet, dass** die elektrischen Hilfssignale Signale umfassen, die auf mindestens eine Zeilenelektrode (52) neben dem zu kontrollierenden Pixel (P) angewendet werden.

8. Verfahren nach einem der Ansprüche 1 bis 7, **dadurch gekennzeichnet, dass** der zeitliche Versatz einer Front der elektrischen Hilfssignale im Verhältnis zur aktiven abfallenden Front des elektrischen Steuersignals zwischen 0 und 50 µs, vorzugsweise zwischen 0 und 10 µs, und in sehr bevorzugter Weise zwischen 5 µs und 10 µs inklusive beträgt.

9. Verfahren nach einem der Ansprüche 1 bis 8, **dadurch gekennzeichnet, dass** das elektrische Hilfssignal ein Signal ist, das auf mindestens eine benachbarte Zeile angewendet wird.

10. Verfahren nach einem der Ansprüche 1 bis 9, **dadurch gekennzeichnet, dass** das elektrische Hilfssignal ein Signal ist, das auf mehrere benachbarte Zeilen angewendet wird.

11. Verfahren nach einem der Ansprüche 1 bis 10, **dadurch gekennzeichnet, dass** es auf eine Anzeige mit aktiver Adressierung angewendet wird.

12. Verfahren nach einem der Ansprüche 1 bis 11, **dadurch gekennzeichnet, dass** es zwei Steuerkreise oder Treiber (D1, D2) umsetzt, die alternativ mit Elektroden ineinander verschlungener Zeilen (n, n+2,...n+p-1; n+1, n+3,...n+p-2) derart verbunden sind, dass zwei beliebige benachbarte Zeilen n und n+1 mit zwei verschiedenen Treibern verbunden sind.

13. Verfahren nach Anspruch 12, **dadurch gekennzeichnet, dass** die zwei Treiber (D1, D2) mindestens während bestimmter Betriebssequenzen verwendet werden, um gleichzeitig und jeweils einerseits Aktivierungssignale auf bestimmte Zeilen und andererseits elektrische Hilfssignale auf bestimmte andere Zeile anzuwenden.

14. Verfahren nach einem der Ansprüche 12 oder 13, **dadurch gekennzeichnet, dass** der erste kollektive Umschaltschritt (E1) der Zeilen (n bis n+p-1) in eine Textur (T) in zwei Unterschritte (E'1 und E" 1) unterteilt ist:
- während eines ersten Unterschritts (E'1) schickt ein erster Treiber (D1) gleichzeitig ein Durchgangssignal (112) in die Textur (T) über die mit ihm verbundenen, durch die kollektive Umschaltung (n, n+2, ... n+p-1) betroffenen Zeilen und ein Signal Vm über die anderen mit dem ersten Treiber (D1) verbundenen Zeilen, wogegen der zweite Treiber (D2) gleichzeitig ein Durchgangssignal (112) in die Textur (T) über die Zeilen schickt, die mit ihm verbunden und von der kollektiven Umschaltung (n+1, n+3 ... n+p-2) betroffen sind, und ein Signal Vm über die anderen Zeilen, die mit dem zweiten Treiber (D2) verbunden sind,
- danach wendet der erste Treiber (D1) in einem zweiten Unterschritt (E"1) gleichzeitig ein Durchgangssignal (112, V1 oder -V1) in der Textur (T) auf die äußersten Zeilen an, die mit ihm verbunden und von der kollektiven Umschaltung betroffen sind (n und n+p-1) und ein Signal Vm auf die anderen Zeilen, die mit dem ersten Treiber (D1) verbunden sind, wogegen der zweite Treiber (D2) gleichzeitig ein elektrisches Hilfssignal (110; Vaux oder -Vaux) über die Zeilen (n-1 und/oder n+1; n+p-2 und/oder n+p) schickt, die den äußersten Zeilen benachbart sind, die von der kollektiven Umschaltung betroffen sind (n und n+p-1) und ein Signal Vm über die anderen Zeilen, die mit dem zweiten Treiber (D2) verbunden sind.

15. Verfahren nach Anspruch 12, **dadurch gekennzeichnet, dass** die zwei Treiber (D1, D2) mindestens während bestimmter Betriebssequenzen verwendet werden, um auf jeweilige Zeilen Aktivierungssignale anzuwenden, die sich zeitlich überschneiden.

16. Bistabile nematische Flüssigkeitskristallanzeige mit Verankerungsbruch, die zwei stabile Flüssigkeitskristalltexturen umfasst, eine gleichförmige oder leicht verdrehte, die mit U bezeichnet wird, in der die Moleküle etwa parallel zueinander sind, und eine andere, die mit T bezeichnet wird, die sich von der ersten durch eine Verdrehung von zirka +/- 180° mit zirka +/- 15° unterscheidet und eine Matrix aus Pixeln umfasst, die in gekreuzten Zeilen und Spalten ausgebildet sind, wobei eine Zustandsumschaltung der Flüssigkeitskristallmoleküle eines Pixels zu einer ausgewählten Textur U oder T oder einer Koexistenz der zwei Texturen durch Anwendung eines elektrischen Steuersignals zwischen zwei Elektroden (50, 52), die jedes Pixel umgeben, gesteuert wird, mit einer Spannung über der Verankerungsbruchspannung, gefolgt von einer aktiven abfallenden Front, die den Erhalt der gewählten Textur erlaubt, wobei die Umschaltung zu einer gewählten Textur in zwei Schritten erfolgt, einem ersten Schritt, bei dem die Umschaltung aller Pixel einer Gruppe von p Zeilen, die den Zeilen n mit n+p-1 entspricht, wobei p größer oder gleich 1 ist, zu der Textur T kollektiv erfolgt, und einem zweiten Schritt, bei dem die p Zeilen der Gruppe einzeln aktiviert werden, um alle Pixel der p Zeilen zu der gewählten Textur umzuschalten, wobei die Umschaltung zu einem Fluss in eine bestimmte Richtung (18) führt, **dadurch gekennzeichnet, dass** sie zur Überwachung der Umschaltung mindestens bestimmter Pixel (P) der Gruppe von p Zeilen Mittel umfasst, die auf mindestens ein Pixel (58), das gemäß der Fließrichtung einem Pixel (P) benachbart ist, dessen Umschaltung von dem elektrischen Steuersignal kontrolliert werden muss, wobei sich das mindestens eine benachbarte Pixel außerhalb der Gruppe der umzuschaltenden Zeilen p befindet, elektrische Hilfssignale anwenden, die geeignet sind, in das benachbarte Pixel einen Hilfsfluss parallel zu besagter Richtung zu induzieren, wobei die Hilfssignale während des ersten Umschaltschritts zu einer gewählten Textur angewendet werden, wobei die Amplitude kleiner ist als die Verankerungsbruchspannung, wobei die abfallenden Fronten im Verhältnis zur aktiven abfallenden Front des elektrischen Steuersignals temporär vor oder übereinstimmend platziert sind, wobei der zeitliche Versatz der abfallenden Fronten der elektrischen Hilfssignale im Verhältnis zur aktiven abfallenden Front des elektrischen Steuersignals bei Raumtemperatur zwischen 0 und einigen Dutzend µs inklusive beträgt.

17. Anzeige nach Anspruch 16, **dadurch gekennzeichnet, dass** sie Zeilen- und/oder Spaltenelektroden und/oder Randblöcke umfasst, die sich außerhalb des Anzeigebereichs befinden.

18. Anzeige nach einem der Ansprüche 16 und 17, **dadurch gekennzeichnet, dass** sie Zeilen- und/oder Spaltenelektroden und/oder Randblöcke umfasst, die sich außerhalb des Anzeigebereichs befinden, deren Zustand bei der Herstellung festgelegt wird.

19. Anzeige nach einem der Ansprüche 16 bis 18, **dadurch gekennzeichnet, dass** sie Zeilen- und/oder Spaltenelektroden und/oder Randblöcke umfasst, die sich außerhalb des Anzeigebereichs befinden, deren Zustand von Hilfssignale gesteuert wird.

## Claims

1. A method for controlling a bistable anchoring-breaking nematic liquid crystal display, said display comprising two stable liquid crystal textures, with one of said textures being uniform or slightly twisted (U), in which the molecules are substantially parallel to each other, and the other of said textures having a twist (T) that differs from the first by a twist of approximately +/- 180° to the nearest +/-15°, and comprising a matrix of pixels arranged in crossed lines and columns, in which the switching of a state of the liquid crystal molecules from a pixel to a selected texture, which can be uniform or slightly twisted (U) or with a twist (T) or a coexistence of two textures, is controlled by the application of an electrical control signal between two electrodes (50, 52) framing each pixel, comprising a voltage greater than the anchoring-breaking voltage, then an active falling edge that allows said selected texture to be obtained, said switching to a selected texture being carried out in two steps, a first step in which the switching is collectively undertaken of all of the pixels of a group of p lines, corresponding to the line n to n+p-1, with p being greater than or equal to 1, toward the twist texture (T) and a second step in which said p lines of said group are activated one-by-one so as to switch all of the pixels of said p lines toward the selected texture, said switching causing a flow in a determined direction (18) close to the sweeping direction, **characterised in that** it comprises, in order to control the switching of at least some of the pixels (P) of said group of p lines, a step comprising applying to at least one neighbouring pixel (58), along the direction of flow, a pixel (P) for which the switching must be controlled by the electrical control signal, with the at least one neighbouring pixel being located outside of the group of p lines to be switched, with auxiliary electrical signals matched so as to induce in said neighbouring pixel an auxiliary flow parallel to said direction, said auxiliary signals being applied during the first step of switching toward a selected texture, the amplitude of which is less than the anchoring-breaking voltage, for which the falling edges are temporarily placed in front of or coinciding with the active falling edge of the electrical control signal, with the time shift of the falling edges of the auxiliary electrical signals relative to the active falling edge of the electrical control signal being between 0 and a few tens of µs at ambient temperature.

2. The method according to claim 1, **characterised in that** said auxiliary electrical signals are applied simultaneously to a plurality of neighbouring pixels (58).

3. The method according to any one of claims 1 to 2, **characterised in that** said auxiliary electrical signals applied to at least one neighbouring pixel (58) are signals applied between two electrodes of said neighbouring pixel, and formed from electrical voltages applied either to a line electrode relative to a reference on a column electrode or to a column electrode relative to a reference on a line electrode or between a line electrode and a column electrode.

4. The method according to any one of claims 1 to 3, **characterised in that** said auxiliary electrical signals applied to at least one neighbouring pixel (58) are monopolar signals.

5. The method according to any one of claims 1 to 4, **characterised in that** said auxiliary electrical signals applied to at least one neighbouring pixel (58) are bipolar signals.

6. The method according to any one of claims 1 to 5, **characterised in that** the sweeping direction (40) of the substrates (10, 20) of the display is perpendicular to the line electrodes (52) and that the auxiliary electrical signals comprise signals applied to the column electrodes (50) and temporarily placed relative to the active falling edge of the electrical control signal.

7. The method according to any one of claims 1 to 6, **characterised in that** said auxiliary electrical signals comprise signals applied to at least one line electrode (52) adjacent to the pixel (P) to be controlled.

8. The method according to any one of claims 1 to 7, **characterised in that** the time shift of an edge of said auxiliary electrical signals relative to the active falling edge of the electrical control signal is between 0 and 50 µs, preferably between 0 and 10 µs, and most preferably between 5 µs and 10 µs.

9. The method according to any one of claims 1 to 8, **characterised in that** said auxiliary electrical signal is a signal applied to at least one neighbouring line.

10. The method according to any one of claims 1 to 9, **characterised in that** said auxiliary electrical signal is a signal applied to a plurality of neighbouring lines.

11. The method according to any one of claims 1 to 10, **characterised in that** it is applied to a display with active addressing.

12. The method according to any one of claims 1 to 11, **characterised in that** it implements two control circuits or drivers (D1, D2) alternately connected to interlaced line electrodes (n, n+2,...n+p-1; n+1, n+3,...n+p-2) so that any two neighbouring lines n and n+1 are connected to two different drivers.

13. The method according to claim 12, **characterised in that** said two drivers (D1, D2) are used, at least during certain operating sequences, to simultaneously and respectively apply activation signals to certain lines on the one hand and auxiliary electrical signals to certain other lines on the other hand.

14. The method according to claim 12 or 13, **characterised in that** said first step (E1) of collectively switching lines (n to n+p-1) in a texture T is divided into two sub-steps (E'1 and E"1):
- during a first sub-step (E'1), a first driver (D1) simultaneously sends a passage signal (112) in said texture (T) on the lines connected thereto and that are affected by the collective switching (n, n+2,... n+p-1) and a signal Vm on the other lines connected to said first driver (D1), whereas the second driver (D2) simultaneously sends a passage signal (112) in said texture (T) on the lines connected thereto and that are affected by the collective switching (n, n+3,... n+p-2) and a signal Vm on the other lines connected to said second driver (D2);
- then in a second sub-step (E"1), said first driver (D1) simultaneously applies a passage signal (112, V1 or -V1) in said texture (T) on the end lines that are connected thereto and that are affected by the collective switching (n and n+p-1) and a signal Vm on the other lines connected to said first driver (D1), whereas said second driver (D2) simultaneously sends an auxiliary electrical signal (110; Vaux or -Vaux) on the lines (n-1 and/or n+1; n+p-2 and/or n+p) neighbouring the end lines that are affected by the collective switching (n and n+p-1) and a signal Vm on the other lines connected to said second driver (D2).

15. The method according to claim 12, **characterised in that** said two drivers (D1, D2) are used, at least for certain operating sequences, to apply activation signals to respective lines that temporarily overlap.

16. A bistable anchoring-breaking nematic liquid crystal display, said display comprising two stable liquid crystal textures, with one of said textures being uniform or slightly twisted, reference U, in which the molecules are substantially parallel to each other, and the other of said textures having a twist, reference T, that differs from the first by a twist of approximately +/- 180° to the nearest +/-15°, and comprising a matrix of pixels arranged in crossed lines and columns, in which the switching of a state of the liquid crystal molecules from a pixel to a selected texture, U or T, or a coexistence of the two textures is controlled by the application of an electrical control signal between two electrodes (50, 52) framing each pixel, comprising a voltage greater than the anchoring-breaking voltage, then an active falling edge that allows said selected texture to be obtained, said switching to a selected texture being carried out in two steps, a first step in which the switching is collectively undertaken of all of the pixels of a group of p lines, corresponding to the line n to n+p-1, with p being greater than or equal to 1, toward the texture T and a second step in which said p lines of said group are activated one-by-one so as to switch all of the pixels of said p lines to the selected texture, said switching causing a flow in a determined direction (18), **characterised in that** it comprises, in order to control the switching of at least some of the pixels (P) of said group of p lines, means applying to at least one neighbouring pixel (58), along the direction of flow, a pixel (P) for which the switching must be controlled by the electrical control signal, with the at least one neighbouring pixel being located outside of the group of p lines to be switched, with auxiliary electrical signals matched so as to induce in said neighbouring pixel an auxiliary flow parallel to said direction, said auxiliary signals being applied during the first step of switching to a selected texture, the amplitude of which is less than the anchoring-breaking voltage, for which the falling edges are temporarily placed in front of or coinciding with the active falling edge of the electrical control signal, with the time shift of the falling edges of the auxiliary electrical signals relative to the active falling edge of the electrical control signal being between 0 and a few tens of µs at ambient temperature.

17. The display according to claim 16, **characterised in that** it comprises line electrodes and/or column electrodes and/or blocks of borders located outside of the display zone.

18. The display according to claim 16 and 17, **characterised in that** it comprises line electrodes and/or column electrodes and/or blocks of borders located outside of the display zone, the state of which is stipulated by the manufacture.

19. The display according to claim any one of claims 16 to 18, **characterised in that** it comprises line electrodes and/or column electrodes and/or blocks of borders located outside of the display zone, the state of which is controlled by auxiliary signals.
